# EUROPEAN PATENT APPLICATION

(11) **EP 4 791 112 A1**
(43) Date of publication of application: **12.08.2026**
(21) Application number: 24884746.9
(22) Date of filing: 29.10.2024
(51) Int. Cl.: H04W 76/27

(54) **MULTI-HOP RELAY METHOD, APPARATUS, AND SYSTEM**

(30) Priority: 31.10.2023 CN 202311439047
(71) Applicant: HUAWEI TECHNOLOGIES CO., LTD., Shenzhen 518129 (CN)
(72) Inventor: PAN, Xiaodan, Shenzhen, Guangdong 518129 (CN); PENG, Wenjie, Shenzhen, Guangdong 518129 (CN); YE, Kuan, Shenzhen, Guangdong 518129 (CN)
(74) Representative: MERH-IP Matias Erny Reichl Hoffmann Patentanwälte PartG mbB
(86) International application number: PCT/CN2024/128192
(87) International publication number: WO 2025/092743

(57) **Abstract**

This application provides a multi-hop relay method, an apparatus, and a system. The method includes: receiving first indication information, where the first indication information indicates that a network connection anomaly occurs between the first terminal device and a first network device, and the first terminal device communicates with the first network device via the second terminal device; and sending second indication information to a third terminal device, where the third terminal device communicates with the first network device via the first terminal device, and the second indication information indicates that the network connection anomaly occurs between the first terminal device and the first network device; or sending third indication information to a third terminal device, where the third indication information indicates that the first terminal device performs network connection reestablishment with a second network device.

## Description

This application claims priority to Chinese Patent Application No. 202311439047.3, filed with the China National Intellectual Property Administration on October 31, 2023 and entitled "MULTI-HOP RELAY METHOD, APPARATUS, AND SYSTEM", which is incorporated herein by reference in its entirety.

### TECHNICAL FIELD

This application relates to the communication field, and specifically, to a multi-hop relay method, an apparatus, and a system.

### BACKGROUND

In a communication system, for example, in a 5th generation (5th Generation, 5G) mobile communication system, inter-device communication allows direct communication between user equipments (user equipments, UEs) over sidelink (sidelink, SL), for example, device-to-device (Device-to-Device, D2D) communication and vehicle-to-everything (vehicle-to-everything, V2X) communication.

With development of technologies, it is considered that a relay UE is involved between the UEs, to improve network and user system performance, enhance coverage, and increase capacities. For example, operators may deploy a relay terminal device relay UE with a stronger capability, for example, with more receive and transmit antennas. In this case, a remote terminal device remote UE may communicate with a network device through cooperation of the relay UE, where the remote UE and the relay UE communicate with each other over sidelink, and a corresponding interface between the remote UE and the relay UE is referred to as PC5. The relay UE is directly connected to the network device, that is, communicates with the network device through a Uu interface.

In multi-hop relay scenarios, through relay of a plurality of relay terminal devices relay UEs, network coverage can be further enhanced, and the remote UE may be provided with relay. That is, information transmission is completed through forwarding via a plurality of relay nodes on links. Multi-hop may be understood as multiple forwarding operations, and the remote UE communicates with the network device through the multiple forwarding operations in multi-hop relay. In the multi-hop relay scenarios, when a network connection anomaly occurs on a specific link between the remote UE and the network device, there are several possible cases. For example, a link between relays may be abnormal, or a link between a relay and the network device may be abnormal. When a specific segment of link is abnormal, how to quickly restore communication between the remote UE and the network device is an urgent problem to be resolved.

### SUMMARY

This application provides a multi-hop relay method, an apparatus, and a system, to quickly restore communication between a remote UE and a network device.

According to a first aspect, a multi-hop relay method is provided. The method may be performed by a first terminal device, or may be performed by a module (for example, a chip or a circuit) in the first terminal device. This is not limited herein. For ease of description, an example in which the method is performed by the first terminal device is used below for description.

The method may include: receiving first indication information sent by a second terminal device, where the first indication information indicates that a network connection anomaly occurs between the second terminal device and a first network device, and the first terminal device communicates with the first network device via the second terminal device; and sending second indication information or third indication information to a third terminal device, where the third terminal device communicates with the first network device via the first terminal device, the second indication information indicates that a network connection anomaly occurs between the first terminal device and the first network device, and the third indication information indicates that the first terminal device performs network connection reestablishment.

According to the foregoing solution, after receiving indication information indicating a network failure/anomaly, a relay terminal device may indicate, to a next-hop terminal device, that the network failure/anomaly occurs or a network status of the relay terminal device. In this way, the next-hop UE may perform subsequent reestablishment or relay UE reselection/cell selection behavior. In this hop-by-hop indication manner, long-time service interruption is avoided.

It should be understood that, that the network connection anomaly occurs between the first terminal device and the first network device may be understood as that a radio link failure or an RRC connection failure occurs between the first terminal device and the first network device or that the first terminal device performs RRC connection reestablishment or cell reselection.

In a possible implementation, the first indication information or the second indication information is carried in RRC layer signaling, SRAP layer signaling, or MAC layer signaling.

According to the foregoing solution, the SRAP layer signaling or the MAC layer signaling is applied to indicate the network connection anomaly, so that parsing and regeneration of the RRC signaling are avoided, and information forwarding efficiency of hop-by-hop indication can be improved.

In a possible implementation, the first indication information and the second indication information are same indication information.

According to the foregoing solution, after receiving the first indication information, the relay terminal device directly forwards the first indication information to the next-hop terminal device, so that the forwarding efficiency of hop-by-hop indication is improved.

In a possible implementation, the method further includes: receiving identification information that is related to the first indication information and that is sent by the second terminal device, where the identification information related to the first indication information indicates that the first indication information indicates that the network connection anomaly occurs between the second terminal device and the first network device.

In a possible implementation, the sending the second indication information to the third terminal device includes: sending the second indication information to the third terminal device based on the identification information related to the first indication information.

According to the foregoing solution, it is determined, based on the identification information related to the first indication information, that the network connection anomaly occurs, so that the first indication information does not need to be parsed, and the forwarding efficiency of hop-by-hop indication is improved.

In a possible implementation, that the third indication information indicates that the first terminal device performs network connection reestablishment with a second network device includes: The third indication information indicates that the first terminal device performs RRC reestablishment or cell reselection with the second network device.

In a possible implementation, the method further includes: releasing a connection to the second terminal device.

In a possible implementation, the method further includes: receiving, from the third terminal device, indication information for releasing a second connection, where the second connection is a network connection between the first terminal device and the third terminal device; and changing paging message identifiers and/or system message request information that correspond/corresponds to the third terminal device and a terminal device that communicates with the first network device via the third terminal device.

According to a second aspect, a multi-hop relay method is provided. The method may be performed by a first terminal device, or may be performed by a module (for example, a chip or a circuit) in the first terminal device. This is not limited herein. For ease of description, an example in which the method is performed by the first terminal device is used below for description.

The method may include: receiving a first configuration; determining that a network connection anomaly occurs on a first link to a first network device; and performing network connection reestablishment with a second network device through a second link based on the first configuration, where the first configuration is used by the first terminal device to perform network connection reestablishment through the second link.

According to the foregoing solution, after determining that a network connection anomaly occurs, a terminal device may apply a redundancy configuration configured in advance, to perform network connection reestablishment, so that service interruption duration is reduced.

It should be understood that, that the first terminal device determines that the network connection anomaly occurs on the first link to the network device includes: The first terminal device detects that the network connection anomaly occurs on the first link to the network device; or the first terminal device receives indication information indicating that the network connection anomaly occurs on the first link.

In a possible implementation, the performing network connection reestablishment with the second network device through the second link includes: performing network connection reestablishment with the second network device via a second terminal device.

It should be understood that, the first network device and the second network device may be a same network device, or may be different network devices.

It should be understood that the second link includes a link between the first terminal device and the second terminal device, and also includes a link between the second terminal device and the second network device.

In a possible implementation, receiving the first configuration includes: receiving the first configuration sent by a network device.

According to the foregoing solution, the network device configures the redundancy configuration for the terminal device in advance. In this way, after determining that the network connection anomaly occurs, the terminal device may apply the redundancy configuration configured in advance, to perform network connection reestablishment, so that the service interruption duration is reduced.

In a possible implementation, the first configuration includes at least one of the following information: an identifier of the second terminal device, a first identifier, and an identifier of the first terminal device, where the first identifier identifies the first configuration.

According to the foregoing solution, the redundancy configuration configured by the network device includes an identifier of the network device, an identifier of the terminal device that applies the redundancy configuration, and an identifier of a corresponding candidate terminal device, so that the terminal device can apply the redundancy configuration based on the identifier.

In a possible implementation, the method further includes: sending fourth indication information to the second terminal device, where the fourth indication information indicates the second terminal device to apply a first relay configuration, and the first relay configuration is used by the first terminal device to perform relay communication with the second network device via the second terminal device.

According to the foregoing solution, after determining that the network connection anomaly occurs, the terminal device may apply the redundancy configuration configured in advance, to determine a relay terminal device; and perform network connection reestablishment via the relay terminal device, so that the service interruption duration is reduced.

In a possible implementation, the fourth indication information includes at least one of the following information: the identifier of the second terminal device, the identifier of the first terminal device, and the first identifier, where the first identifier identifies the first configuration and/or the first relay configuration.

In a possible implementation, the first relay configuration includes at least one of the following information: the identifier of the second terminal device, the identifier of the first terminal device, and the first identifier, where the first identifier identifies the first configuration and/or the first relay configuration.

According to the foregoing solution, a relay configuration configured by the network device includes the identifier of the network device, an identifier of the redundancy configuration corresponding to the relay configuration, an identifier of a terminal device that applies the relay configuration, and the identifier of the terminal device that applies the redundancy configuration, so that the terminal device can apply the relay configuration based on the identifier.

In a possible implementation, the method further includes: sending fifth indication information to a third terminal device, where the fifth indication information indicates the third terminal device to apply a second configuration, the second configuration is for performing network connection reestablishment between the third terminal device and the network device through a third link, and the third link includes a communication link between the first terminal device and the third terminal device and the second link.

According to the foregoing solution, the network device configures redundancy configurations for a plurality of terminal devices, so that after determining that the network connection anomaly occurs, the terminal device may indicate a downstream terminal device to also apply a corresponding redundancy configuration, so that the service interruption duration is reduced.

In a possible implementation, the fifth indication information includes at least one of the following information: an identifier of the third terminal device, the identifier of the first terminal device, and a second identifier, where the second identifier identifies the first configuration and/or the second configuration.

In a possible implementation, the first configuration further includes one or more of the following: a relay configuration used by the third terminal device to communicate with the network device via the first terminal device; the identifier of the third terminal device; and the second identifier, where the second identifier identifies the first configuration and/or the second configuration.

In a possible implementation, the second configuration includes at least one of the following information: the identifier of the third terminal device, the identifier of the first terminal device, and the second identifier, where the second identifier identifies the first configuration and/or the second configuration.

In a possible implementation, the method further includes: The third link includes the communication link between the first terminal device and the third terminal device and the second link.

In a possible implementation, the method further includes: The first terminal device determines that signal quality between the first terminal device and the second terminal device satisfies a first condition.

According to the foregoing solution, if the first terminal device determines that the signal quality between the first terminal device and the second terminal device satisfies the first condition, the redundancy configuration may be applied; or if the first condition is not satisfied, another redundancy configuration that satisfies the condition may be applied, so that a success rate of network connection reestablishment is improved, and the service interruption duration is reduced.

According to a third aspect, a multi-hop relay method is provided. The method may be performed by a second terminal device, or may be performed by a module (for example, a chip or a circuit) in the second terminal device. This is not limited herein. For ease of description, an example in which the method is performed by the second terminal device is used below for description.

The method may include: receiving a first relay configuration; and receiving fourth indication information sent by a first terminal device, where the fourth indication information indicates to apply the first relay configuration, and the first relay configuration is used by the first terminal device to perform relay communication with a second network device via the second terminal device.

In a possible implementation, the first relay configuration includes at least one of the following information: an identifier of the second terminal device, an identifier of the first terminal device, and a first identifier, where the first identifier identifies the first relay configuration.

In a possible implementation, the fourth indication information includes at least one of the following information: the identifier of the second terminal device, the identifier of the first terminal device, and the first identifier, where the first identifier identifies the first relay configuration.

In a possible implementation, the method further includes: sending sixth indication information to a fourth terminal device, where the sixth indication information indicates the fourth terminal device to apply a second relay configuration, and the second relay configuration is used by the first terminal device and/or the second terminal device to perform relay communication with the second network device via the fourth terminal device.

In a possible implementation, the second relay configuration includes at least one of the following information: the identifier of the second terminal device, an identifier of the fourth terminal device, and a third identifier, where the third identifier identifies the second relay configuration.

In a possible implementation, the sixth indication information includes at least one of the following information: the identifier of the second terminal device, an identifier of the fourth terminal device, and a third identifier, where the third identifier identifies the first relay configuration and/or the second relay configuration.

According to a fourth aspect, a multi-hop relay method is provided. The method may be performed by a network device, or may be performed by a module (for example, a chip or a circuit) in the network device. This is not limited herein. For ease of description, an example in which the method is performed by a terminal device is used below for description.

The method may include: receiving information about a candidate relay terminal device sent by a first terminal device, where the candidate relay terminal device includes a second terminal device; determining a first configuration, where the first configuration is for performing network connection reestablishment via the second terminal device after a network connection anomaly occurs between the first terminal device and the network device; and sending the first configuration to the first terminal device.

The method may alternatively be understood as: receiving, through a first link, the information about the candidate relay terminal device sent by the first terminal device, where the candidate relay terminal device includes the second terminal device; determining the first configuration, where the first configuration is for performing network connection reestablishment through a second link after the network connection anomaly occurs on the first link between the first terminal device and the network device; and sending the first configuration to the first terminal device through the first link.

In a possible implementation, the network device receives, from a first network device, the information about the candidate relay terminal device sent by the first terminal device, where the candidate relay terminal device includes the second terminal device; determines the first configuration, where the first configuration is for performing network connection reestablishment via the second terminal device after the network connection anomaly occurs between the first terminal device and the network device; and sends the first configuration to the first network device, to send the first configuration to the first terminal device via the first network device. Optionally, the network device receives a target relay terminal device from the first network device, where the target relay terminal device includes the second terminal device, and the target relay terminal device is determined by the first network device based on the information about the candidate relay terminal device sent by the first terminal device. In a possible implementation, the determining the first configuration includes: determining the first configuration based on at least one of the following information: the information about the candidate relay terminal device and a communication capability of the first terminal device.

In a possible implementation, the first configuration includes at least one of the following information: identification information of the second terminal device, a first identifier, and identification information of the first terminal device, where the first identifier identifies the first configuration.

In a possible implementation, the method further includes: determining a first relay configuration; and sending the first relay configuration to the second terminal device, where the first relay configuration is used by the first terminal device to perform relay communication with a second network device via the second terminal device.

In a possible implementation, the first relay configuration includes at least one of the following information: an identifier of the second terminal device, an identifier of the first terminal device, and the first identifier, where the first identifier identifies the first configuration and/or the first relay configuration.

In a possible implementation, the method further includes: determining a second configuration, where the second configuration is used by a third terminal device to perform network connection reestablishment via the first terminal device; and sending the second configuration to the third terminal device.

In a possible implementation, the second configuration includes at least one of the following information: an identifier of the third terminal device, the identifier of the first terminal device, and a second identifier, where the second identifier identifies the first configuration and/or the second configuration.

In a possible implementation, the first configuration further includes a relay configuration used by the third terminal device to communicate with the network device via the first terminal device.

In a possible implementation, the method further includes: determining a second relay configuration, where the second relay configuration is used by the first terminal device and/or the second terminal device to perform relay communication with the network device via a fourth terminal device; and sending the second relay configuration to the fourth terminal device.

In a possible implementation, the second relay configuration includes at least one of the following information: the identifier of the second terminal device, an identifier of the fourth terminal device, and a third identifier, where the third identifier identifies the second relay configuration.

For beneficial effects of the implementations of the third aspect and the fourth aspect, refer to the second aspect.

According to a fifth aspect, a multi-hop relay method is provided. The method may be performed by a first terminal device, or may be performed by a module (for example, a chip or a circuit) in the first terminal device. This is not limited herein. For ease of description, an example in which the method is performed by the first terminal device is used below for description.

The method may include: determining that a network connection anomaly occurs between the first terminal device and a network device; and sending seventh indication information to a second terminal device, where the seventh indication information indicates the second terminal device to reestablish a first connection, and the first connection is a network connection between the second terminal device and the network device via the first terminal device.

According to the foregoing solution, after determining that a network connection anomaly occurs, a terminal device in a connected state triggers reestablishment.

Optionally, indication information is sent to a downstream terminal device, to indicate the downstream terminal device to keep a connection to the first terminal device and communicate with the network device. This can avoid sending the indication information hop by hop, and reduce service interruption duration.

It should be understood that, that the first terminal device determines that the network connection anomaly occurs between the first terminal device and the network device includes: The first terminal device detects that the network connection anomaly occurs between the first terminal device and the network device; or the first terminal device receives indication information indicating that the network connection anomaly occurs.

In a possible implementation, the method further includes: sending a first message to the network device, where the first message indicates that network connection reestablishment is to be performed; and receiving a second message sent by the network device, where the second message includes a first configuration, the first configuration is for performing network connection reestablishment between the first terminal device and the network device, the first configuration includes a relay configuration, and the relay configuration is used by the second terminal device to communicate with the network device via the first terminal device.

In a possible implementation, the first message includes a first association relationship, and the first association relationship is a connection relationship between the first terminal device and the second terminal device.

Optionally, the first association relationship includes an identifier of the second terminal device.

According to the foregoing solution, the network device may maintain a context of a relay terminal device, including information about and a related configuration of a downstream terminal device connected to the relay terminal device. When the relay terminal device triggers reestablishment, the connected downstream terminal device in the connected state and the relay terminal device keep a connection, and perform reestablishment together. This can avoid sending the indication information hop by hop, and reduce the service interruption duration.

In a possible implementation, the method further includes: sending eighth indication information to the network device, where the eighth indication information indicates that the first terminal device supports configuration of the relay configuration for the second terminal device in a network connection reestablishment process.

According to a sixth aspect, a multi-hop relay method is provided. The method may be performed by a second terminal device, or may be performed by a module (for example, a chip or a circuit) in the second terminal device. This is not limited herein. For ease of description, an example in which the method is performed by the second terminal device is used below for description.

The method may include: receiving seventh indication information, where the seventh indication information indicates the second terminal device to reestablish a first connection, and the first connection is a network connection between the second terminal device and a network device via a first terminal device.

In a possible implementation, the method further includes: sending a second message to the network device, where the second message indicates that the first connection is to be reestablished; and receiving a second configuration sent by the network device, where the second configuration is used by the second terminal device to reestablish the first connection to the network device via the first terminal device.

In a possible implementation, the second message includes a first association relationship, and the first association relationship is a connection relationship between the first terminal device and the second terminal device.

In a possible implementation, the method further includes: sending eighth indication information to the network device, where the eighth indication information indicates the first association relationship, and the first association relationship indicates the connection relationship between the first terminal device and the second terminal device.

In a possible implementation, the method further includes: reestablishing the first connection. In addition, the second terminal device keeps a connection to the first terminal device.

In a possible implementation, the method further includes: sending ninth indication information to the first terminal device, where the ninth indication information indicates the first terminal device to keep the network connection to the second terminal device when performing network connection reestablishment with the network device.

According to a seventh aspect, a multi-hop relay method is provided. The method may be performed by a network device, or may be performed by a module (for example, a chip or a circuit) in the network device. This is not limited herein. For ease of description, an example in which the method is performed by the network device is used below for description.

The method may include: receiving eighth indication information, where the eighth indication information indicates that a first terminal device supports configuration of a relay configuration for a second terminal device in a network connection reestablishment process; and performing network connection reestablishment with the second terminal device and the first terminal device based on a first association relationship and the eighth indication information.

In a possible implementation, the method further includes: receiving the first association relationship, where the first association relationship indicates a connection relationship between the first terminal device and the second terminal device, and the first association relationship includes an identifier of the second terminal device.

In a possible implementation, that the second terminal device and the first terminal device perform network connection reestablishment includes: performing network connection reestablishment with the second terminal device via the first terminal device.

In a possible implementation, the method further includes: receiving a first message, where the first message indicates that network connection reestablishment is to be performed; determining a first configuration based on the first association relationship; and sending the first configuration, where the first configuration is used by the first terminal device to perform network connection reestablishment with the network device, the first configuration further includes the relay configuration, and the relay configuration is used by the second terminal device to perform network connection reestablishment with the network device via the first terminal device.

In a possible implementation, the method further includes: receiving a second message, where the second message indicates that a first connection is to be reestablished; determining a second configuration based on the first association relationship; and sending the second configuration, where the second configuration is used by the second terminal device to reestablish the first connection to the network device via the first terminal device.

According to an eighth aspect, a communication apparatus is provided. The apparatus may be a terminal device, or may be a module (for example, a chip or a circuit) in the terminal device. The apparatus includes a transceiver unit, configured to receive first indication information sent by a second terminal device, where the first indication information indicates that a network connection anomaly occurs between the second terminal device and a first network device, and the first terminal device communicates with the first network device via the second terminal device, where the transceiver unit is further configured to send second indication information to a third terminal device, where the third terminal device communicates with the first network device via the first terminal device, and the second indication information indicates that a network connection anomaly occurs between the first terminal device and the first network device; or the transceiver unit is configured to send third indication information to a third terminal device, where the third indication information indicates that the first terminal device performs network connection reestablishment.

In a possible implementation, the first indication information or the second indication information is carried in RRC layer signaling, SRAP layer signaling, or MAC layer signaling.

In a possible implementation, the first indication information and the second indication information are same indication information.

In a possible implementation, the transceiver unit is further configured to receive identification information that is related to the first indication information and that is sent by the second terminal device, where the identification information related to the first indication information indicates that the first indication information indicates that the network connection anomaly occurs between the second terminal device and the first network device.

In a possible implementation, the transceiver unit is configured to send the second indication information to the third terminal device based on the identification information related to the first indication information.

In a possible implementation, that the third indication information indicates that the first terminal device performs network connection reestablishment with a second network device includes: The third indication information indicates that the first terminal device performs RRC reestablishment or cell reselection with the second network device.

In a possible implementation, the apparatus further includes a processing unit, configured to control the apparatus to release a connection to the second terminal device.

In a possible implementation, the transceiver unit is further configured to receive, from the third terminal device, indication information for releasing a second connection, where the second connection is a network connection between the first terminal device and the third terminal device; and the processing unit is further configured to change paging message identifiers and/or system message request information that correspond/corresponds to the third terminal device and a terminal device that communicates with the first network device via the third terminal device.

According to a ninth aspect, a communication apparatus is provided. The apparatus may be a terminal device, or may be a module (for example, a chip or a circuit) in the terminal device. The apparatus includes: a transceiver unit, configured to: receive a first configuration; and determine that a network connection anomaly occurs on a first link to a first network device; and a processing unit, configured to perform network connection reestablishment with a second network device through a second link based on the first configuration, where the first configuration is used by the first terminal device to perform network connection reestablishment through the second link.

In a possible implementation, the performing network connection reestablishment with the second network device through the second link includes: performing network connection reestablishment with the second network device via a second terminal device.

In a possible implementation, the transceiver unit is further configured to receive the first configuration sent by a network device.

In a possible implementation, the first configuration includes at least one of the following information: an identifier of the second terminal device, a first identifier, and an identifier of the first terminal device, where the first identifier identifies the first configuration.

In a possible implementation, the transceiver unit is further configured to send fourth indication information to the second terminal device, where the fourth indication information indicates the second terminal device to apply a first relay configuration, and the first relay configuration is used by the first terminal device to perform relay communication with the second network device via the second terminal device.

In a possible implementation, the fourth indication information includes at least one of the following information: the identifier of the second terminal device, the identifier of the first terminal device, and the first identifier, where the first identifier identifies the first configuration and/or the first relay configuration.

In a possible implementation, the first relay configuration includes at least one of the following information: the identifier of the second terminal device, the identifier of the first terminal device, and the first identifier, where the first identifier identifies the first configuration and/or the first relay configuration.

In a possible implementation, the transceiver unit is further configured to send fifth indication information to a third terminal device, where the fifth indication information indicates the third terminal device to apply a second configuration, the second configuration is for performing network connection reestablishment between the third terminal device and the network device through a third link, and the third link includes a communication link between the first terminal device and the third terminal device and the second link.

In a possible implementation, the fifth indication information includes at least one of the following information: an identifier of the third terminal device, the identifier of the first terminal device, and a second identifier, where the second identifier identifies the first configuration and/or the second configuration.

In a possible implementation, the first configuration further includes one or more of the following: a relay configuration used by the third terminal device to communicate with the network device via the first terminal device; the identifier of the third terminal device; and the second identifier, where the second identifier identifies the first configuration and/or the second configuration.

In a possible implementation, the second configuration includes at least one of the following information: the identifier of the third terminal device, the identifier of the first terminal device, and the second identifier, where the second identifier identifies the first configuration and/or the second configuration.

In a possible implementation, the third link includes the communication link between the first terminal device and the third terminal device and the second link.

In a possible implementation, the processing unit is further configured to determine that signal quality between the first terminal device and the second terminal device satisfies a first condition.

According to a tenth aspect, a communication apparatus is provided. The apparatus may be a terminal device, or may be a module (for example, a chip or a circuit) in the terminal device. The apparatus includes a transceiver unit, configured to receive a first relay configuration, where the transceiver unit is further configured to receive fourth indication information sent by a first terminal device, where the fourth indication information indicates to apply the first relay configuration, and the first relay configuration is used by the first terminal device to perform relay communication with a second network device via the second terminal device.

In a possible implementation, the first relay configuration includes at least one of the following information: an identifier of the second terminal device, an identifier of the first terminal device, and a first identifier, where the first identifier identifies the first relay configuration.

In a possible implementation, the fourth indication information includes at least one of the following information: the identifier of the second terminal device, the identifier of the first terminal device, and the first identifier, where the first identifier identifies the first relay configuration.

In a possible implementation, the transceiver unit is further configured to send sixth indication information to a fourth terminal device, where the sixth indication information indicates the fourth terminal device to apply a second relay configuration, and the second relay configuration is used by the first terminal device to perform relay communication with the second network device via the fourth terminal device.

In a possible implementation, the second relay configuration includes at least one of the following information: the identifier of the second terminal device, an identifier of the fourth terminal device, and a third identifier, where the third identifier identifies the second relay configuration.

In a possible implementation, the sixth indication information includes at least one of the following information: the identifier of the second terminal device, an identifier of the fourth terminal device, and a third identifier, where the third identifier identifies the first relay configuration and/or the second relay configuration.

According to an eleventh aspect, a communication apparatus is provided. The apparatus may be a network device, or may be a module (for example, a chip or a circuit) in the network device. The apparatus includes: a transceiver unit, configured to receive information about a candidate relay terminal device sent by a first terminal device, where the candidate relay terminal device includes a second terminal device; and a processing unit, configured to determine a first configuration, where the first configuration is for performing network connection reestablishment via the second terminal device after a network connection anomaly occurs between the first terminal device and the network device, where the transceiver unit is further configured to send the first configuration to the first terminal device.

In a possible implementation, the processing unit is further configured to determine the first configuration based on at least one of the following information: the information about the candidate relay terminal device and a communication capability of the first terminal device.

In a possible implementation, the first configuration includes at least one of the following information: identification information of the second terminal device, a first identifier, and identification information of the first terminal device, where the first identifier identifies the first configuration.

In a possible implementation, the processing unit is further configured to determine a first relay configuration; and the transceiver unit is further configured to send the first relay configuration to the second terminal device, where the first relay configuration is used by the first terminal device to perform relay communication with a second network device via the second terminal device.

In a possible implementation, the first relay configuration includes at least one of the following information: an identifier of the second terminal device, an identifier of the first terminal device, and the first identifier, where the first identifier identifies the first configuration and/or the first relay configuration.

In a possible implementation, the processing unit is further configured to determine a second configuration, where the second configuration is used by a third terminal device to perform network connection reestablishment via the first terminal device; and the transceiver unit is further configured to send the second configuration to the third terminal device.

In a possible implementation, the second configuration includes at least one of the following information: an identifier of the third terminal device, the identifier of the first terminal device, and a second identifier, where the second identifier identifies the first configuration and/or the second configuration.

In a possible implementation, the first configuration further includes a relay configuration used by the third terminal device to communicate with the network device via the first terminal device.

In a possible implementation, the processing unit is further configured to determine a second relay configuration, where the second relay configuration is used by the second terminal device to perform relay communication with the network device via a fourth terminal device; and the transceiver unit is further configured to send the second relay configuration to the fourth terminal device.

In a possible implementation, the second relay configuration includes at least one of the following information: the identifier of the second terminal device, an identifier of the fourth terminal device, and a third identifier, where the third identifier identifies the second relay configuration.

According to a twelfth aspect, a communication apparatus is provided. The apparatus may be a terminal device, or may be a module (for example, a chip or a circuit) in the terminal device. The apparatus includes: a processing unit, configured to determine that a network connection anomaly occurs between the first terminal device and a network device; and a transceiver unit, configured to send seventh indication information to a second terminal device, where the seventh indication information indicates the second terminal device to reestablish a first connection, and the first connection is a network connection between the second terminal device and the network device via the first terminal device.

In a possible implementation, the transceiver unit is further configured to send a first message to the network device, where the first message indicates that network connection reestablishment is to be performed; and the apparatus further includes the transceiver unit, configured to receive a second message sent by the network device, where the second message includes a first configuration, the first configuration is for performing network connection reestablishment between the first terminal device and the network device, the first configuration includes a relay configuration, and the relay configuration is used by the second terminal device to communicate with the network device via the first terminal device.

In a possible implementation, the first message includes a first association relationship, and the first association relationship is a connection relationship between the first terminal device and the second terminal device.

Optionally, the first association relationship includes an identifier of the second terminal device.

In a possible implementation, the transceiver unit is further configured to send eighth indication information to the network device, where the eighth indication information indicates that the first terminal device supports configuration of the relay configuration for the second terminal device in a network connection reestablishment process.

According to a thirteenth aspect, a communication apparatus is provided. The apparatus may be a terminal device, or may be a module (for example, a chip or a circuit) in the terminal device. The apparatus includes a transceiver unit, configured to receive seventh indication information, where the seventh indication information indicates the second terminal device to reestablish a first connection, and the first connection is a network connection between the second terminal device and a network device via a first terminal device.

In a possible implementation, the transceiver unit is further configured to send a second message to the network device, where the second message indicates that the first connection is to be reestablished; and the transceiver unit is further configured to receive a second configuration sent by the network device, where the second configuration is used by the second terminal device to reestablish the first connection to the network device via the first terminal device.

In a possible implementation, the second message includes a first association relationship, and the first association relationship is a connection relationship between the first terminal device and the second terminal device.

In a possible implementation, the transceiver unit is further configured to send eighth indication information to the network device, where the eighth indication information indicates the first association relationship, and the first association relationship indicates the connection relationship between the first terminal device and the second terminal device.

In a possible implementation, the transceiver unit is further configured to reestablish the first connection. In addition, the second terminal device keeps a connection to the first terminal device.

In a possible implementation, the transceiver unit is further configured to send ninth indication information to the first terminal device, where the ninth indication information indicates the first terminal device to keep the network connection to the second terminal device when performing network connection reestablishment with the network device.

According to a fourteenth aspect, a communication apparatus is provided. The apparatus may be a network device, or may be a module (for example, a chip or a circuit) in the network device. The apparatus includes a transceiver unit, configured to receive a first association relationship, where the first association relationship indicates a connection relationship between a first terminal device and a second terminal device, and the first association relationship includes an identifier of the second terminal device, where the transceiver unit is further configured to receive eighth indication information, where the eighth indication information indicates that the first terminal device supports configuration of a relay configuration for the second terminal device in a network connection reestablishment process; and the transceiver unit is further configured to perform network connection reestablishment with the second terminal device and the first terminal device based on the first association relationship and the eighth indication information.

In a possible implementation, performing network connection reestablishment with the second terminal device and the first terminal device includes: performing network connection reestablishment with the second terminal device via the first terminal device.

In a possible implementation, the transceiver unit is further configured to: receive a first message, where the first message indicates that network connection reestablishment is to be performed; and determine a first configuration based on the first association relationship; and the transceiver unit is further configured to send the first configuration, where the first configuration is used by the first terminal device to perform network connection reestablishment with the network device, the first configuration further includes the relay configuration, and the relay configuration is used by the second terminal device to perform network connection reestablishment with the network device via the first terminal device.

In a possible implementation, the transceiver unit is further configured to: receive a second message, where the second message indicates that a first connection is to be reestablished; determine a second configuration based on the first association relationship; and send the second configuration, where the second configuration is used by the second terminal device to reestablish the first connection to the network device via the first terminal device.

According to a fifteenth aspect, a wireless communication apparatus is provided, and includes modules or units configured to perform the method according to any one of the first aspect or the possible implementations of the first aspect.

According to a sixteenth aspect, a wireless communication apparatus is provided, and includes modules or units configured to perform the method according to any one of the second aspect or the possible implementations of the second aspect.

According to a seventeenth aspect, a wireless communication apparatus is provided, and includes modules or units configured to perform the method according to any one of the third aspect or the possible implementations of the third aspect.

According to an eighteenth aspect, a wireless communication apparatus is provided, and includes modules or units configured to perform the method according to any one of the fourth aspect or the possible implementations of the fourth aspect.

According to a nineteenth aspect, a wireless communication apparatus is provided, and includes modules or units configured to perform the method according to any one of the fifth aspect or the possible implementations of the fifth aspect.

According to a twentieth aspect, a wireless communication apparatus is provided, and includes modules or units configured to perform the method according to any one of the sixth aspect or the possible implementations of the sixth aspect.

According to a twenty-first aspect, a wireless communication apparatus is provided, and includes modules or units configured to perform the method according to any one of the seventh aspect or the possible implementations of the seventh aspect.

According to a twenty-second aspect, a communication device is provided, and includes a processor. The processor is coupled to a memory, and may be configured to perform the method according to any one of the first aspect to the sixth aspect and any one of the possible implementations of the foregoing aspects. In a possible implementation, the communication device further includes the memory. In a possible implementation, the communication device further includes a communication interface, and the processor is coupled to the communication interface. In a possible implementation, the communication device further includes a communication interface, and the processor is coupled to the communication interface.

In an implementation, the communication device is a terminal device. When the communication device is the terminal device, the communication interface may be a transceiver or an input/output interface. In a possible implementation, the transceiver may be a transceiver circuit. In a possible implementation, the input/output interface may be an input/output circuit.

In another implementation, the communication device is a network device. When the communication device is the network device, the communication interface may be a transceiver or an input/output interface. In a possible implementation, the transceiver may be a transceiver circuit. In a possible implementation, the input/output interface may be an input/output circuit.

In another implementation, the communication device is a data collection application function network element. When the communication device is the data collection application function network element, the communication interface may be a transceiver or an input/output interface. In a possible implementation, the transceiver may be a transceiver circuit. In a possible implementation, the input/output interface may be an input/output circuit.

In another implementation, the communication device is an event consumer application function network element. When the communication device is the data collection application function network element, the communication interface may be a transceiver or an input/output interface. In a possible implementation, the transceiver may be a transceiver circuit. In a possible implementation, the input/output interface may be an input/output circuit.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a twenty-third aspect, a communication apparatus is provided, and includes an input circuit, an output circuit, and a processing circuit. The processing circuit is configured to: receive a signal through the input circuit, and transmit a signal through the output circuit, to cause the method according to any one of the first aspect to the seventh aspect and any one of the possible implementations of the foregoing aspects to be implemented.

In a specific implementation process, the communication apparatus may be a chip, the input circuit may be an input pin, the output circuit may be an output pin, and the processing circuit may be a transistor, a gate circuit, a trigger, various logic circuits, and the like. An input signal received by the input circuit may be received and input by, for example but not limited to, a receiver, and a signal output by the output circuit may be output to and transmitted by, for example but not limited to, a transmitter. The input circuit and the output circuit may be different circuits, or may be a same circuit. In this case, the circuit is used as the input circuit and the output circuit respectively at different moments. Specific implementations of a processor and the various circuits are not limited in embodiments of this application.

According to a twenty-fourth aspect, a processing apparatus is provided, and includes a processor and a memory. The processor is configured to: read instructions stored in the memory, receive a signal through a receiver, and transmit a signal through a transmitter, to perform the method according to any one of the first aspect to the seventh aspect and any one of the possible implementations of the foregoing aspects.

In a possible implementation, there are one or more processors, and there are one or more memories.

In a possible implementation, the memory and the processor may be integrated together, or the memory and the processor are disposed separately.

In a specific implementation process, the memory may be a non-transitory (non-transitory) memory, for example, a read-only memory (read-only memory, ROM). The memory and the processor may be integrated into one chip, or may be separately disposed on different chips. A type of the memory and a manner in which the memory and the processor are disposed are not limited in this embodiment of this application.

It should be understood that, a related data exchange process, for example, sending of indication information, may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The processor in the foregoing aspect may be a chip, and the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to a twenty-fifth aspect, a computer program product is provided. The computer program product includes a computer program (which may also be referred to as code or instructions). When the computer program is run, a computer is caused to perform the method according to any one of the first aspect to the seventh aspect and any one of the possible implementations of the foregoing aspects.

According to a twenty-sixth aspect, a computer-readable storage medium is provided. The computer-readable storage medium stores a computer program (which may also be referred to as code or instructions). When the computer program is run on a computer, the computer is caused to perform the method according to any one of the first aspect to the seventh aspect and any one of the possible implementations of the foregoing aspects.

According to a twenty-seventh aspect, a chip system is provided, and includes a processor. The processor is configured to: invoke a computer program from a memory, and run the computer program, so that a communication device on which the chip system is installed performs the method according to any one of the first aspect to the seventh aspect and the possible implementations thereof.

In a possible implementation, the chip system further includes the memory, and the memory is configured to store the computer program.

The chip system may include an input circuit or interface configured to send information or data, and an output circuit or interface configured to receive information or data.

According to a twenty-eighth aspect, a multi-hop relay system is provided, and includes at least one of the first terminal device, the second terminal device, and the network device.

### BRIEF DESCRIPTION OF DRAWINGS

FIG. 1 is a diagram of an example of a communication system to which this application is applicable;
FIG. 2 is a diagram of an example of a communication system according to an embodiment of this application;
FIG. 3 is a schematic flowchart of a multi-hop relay method according to an embodiment of this application;
FIG. 4 is a diagram of an example of a communication system according to an embodiment of this application;
FIG. 5 is a schematic flowchart of a multi-hop relay method according to an embodiment of this application;
FIG. 6 is a schematic flowchart of a multi-hop relay method according to an embodiment of this application;
FIG. 7 is a schematic block diagram of a communication apparatus according to an embodiment of this application;
FIG. 8 is a schematic block diagram of a communication apparatus according to an embodiment of this application; and
FIG. 9 is a schematic block diagram of a chip system according to an embodiment of this application.

### DESCRIPTION OF EMBODIMENTS

The following describes technical solutions in this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a wireless fidelity (wireless fidelity, Wi-Fi) system, a device-to-device (device-to-device, D2D) communication system, a vehicle-to-everything (vehicle-to-everything, V2X) communication system, a universal mobile telecommunications system (universal mobile telecommunications System, UMTS), a worldwide interoperability for microwave access (worldwide interoperability for microwave access, WiMAX) communication system, a machine to machine (machine to machine, M2M) communication system, a machine type communication (machine type communication, MTC) system, an internet of things (internet of things, IoT) communication system, a non-terrestrial network (non-terrestrial network, NTN) system, a 5th generation (5th generation, 5G) mobile communication system, a 6th generation (6th generation, 6G) mobile communication system, a new radio (new radio, NR) system, or a future wireless communication system.

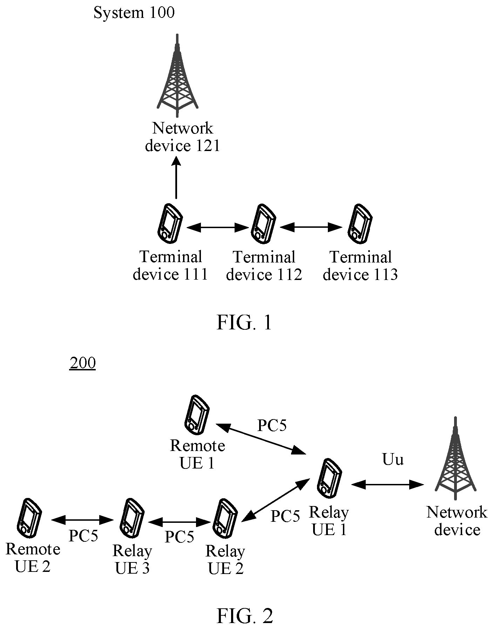

For ease of understanding embodiments of this application, a diagram of a structure of a communication system 100 according to an embodiment of this application is first briefly described with reference to FIG. 1. As shown in FIG. 1, the communication system 100 may include three terminal devices, for example, a terminal device 111, a terminal device 112, and a terminal device 113 shown in FIG. 1. The communication system 100 may further include at least one network device, for example, a network device 121 shown in FIG. 1.

The terminal device 113 may communicate with the network device 121 via the terminal device 112 and the terminal device 111. That is, the terminal device 113 needs to send data to the network device 121 through three paths. A 1^{st} segment is a path between the terminal device 113 and the terminal device 112, a 2^{nd} segment is a path between the terminal device 112 and the terminal device 111, and a 3^{rd} segment is a path between the terminal device 111 and the network device 121.

The terminal device 112 and the terminal device 111 may assist the terminal device 111 in forwarding data to the terminal device 113, to increase coverage, and increase a communication distance. The terminal device 111 communicates with the network device 121, so that the terminal device 113 can communicate with the network device 121.

In an example, the terminal device 111 and the terminal device 112 may be referred to as relay terminal devices relay UEs, and the terminal device 113 may be referred to as a remote terminal device remote UE. A remote UE may perform data transmission through cooperation of a relay UE. The remote UE and the relay UE may directly communicate with each other, for example, through an SL connection, Wi-Fi, Bluetooth, or a wired connection. Unicast, multicast, or broadcast communication is supported on an SL. The remote UE performs data communication with a base station through relay of the relay UE. A quantity of relay UEs between the remote UE and the base station is not limited, and a specific quantity is limited in embodiments.

For the foregoing system, a possible understanding is that a base station coverage signal at the remote terminal device is poor or the remote terminal device is located outside coverage of the base station, and coverage enhancement may be implemented by using the relay terminal device.

Another possible understanding is that the relay terminal device has a stronger capability. For example, more receive antennas and transmit antennas are configured for the relay terminal device, so that a system capacity can be increased.

It should be understood that FIG. 1 is merely a simplified diagram used as an example for ease of understanding, and the communication system may further include another network device or another terminal device that is not shown in FIG. 1.

It should be further understood that FIG. 1 is merely an application scenario of embodiments of this application, and a scenario to which the method is applied is not limited in this application. In an embodiment shown below, for ease of understanding and description, interaction between a network device and a terminal device in a relay communication scenario is used as an example to describe in detail the method provided in embodiments of this application.

The terminal device in embodiments of this application may be a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

The terminal may be widely used in various scenarios, for example, a device-to-device (device-to-device, D2D) scenario, a vehicle to everything (vehicle to everything, V2X) communication scenario, a machine type communication (machine type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. In addition, the terminal device may alternatively be a terminal device in the internet of things (internet of things, IoT) system. An IoT is an important component in future development of information technologies. A main technical feature of the IoT is to connect things to a network by using a communication technology, to implement an intelligent network for human-machine interconnection and thing-thing interconnection.

It should be understood that a specific form of the terminal device is not limited in this application.

The network device in embodiments of this application may alternatively be a device configured to communicate with the terminal device. The network device may be a base transceiver station (base transceiver station, BTS) in a global system for mobile communications (global system for mobile communications, GSM) system or code division multiple access (code division multiple access, CDMA), a NodeB (NodeB, NB) in a wideband code division multiple access (wideband code division multiple access, WCDMA) system, an evolved NodeB (evolved NodeB, eNB or eNodeB) in an LTE system, or a radio controller in a cloud radio access network (cloud radio access network, CRAN) scenario. Alternatively, the communication apparatus may be a relay station, an access point, a vehicle-mounted device, a wearable device, a communication apparatus in the 5G network, a communication apparatus in the future evolved PLMN network, or the like. This is not limited in embodiments of this application.

It should be understood that the network device in the wireless communication system may be any device having a wireless transceiver function. The device includes but is not limited to: an evolved NodeB (evolved NodeB, eNB), a radio network controller (radio network controller, RNC), a road side unit (road side unit, RSU), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in the wireless fidelity (wireless fidelity, Wi-Fi) system, a wireless relay node, a wireless backhaul node, a transmission point (transmission point, TP), a transmission and reception point (transmission and reception point, TRP) or the like, or may be a gNB or a transmission point (TRP or TP) in the 5G (for example, NR) system, or one or a group of (including a plurality of antenna panels) antenna panels of a base station in the 5G system. The network device may alternatively be a network side apparatus that provides a communication service or communication control for the terminal device in vehicle to everything.

Alternatively, the network device may be a plurality of radio access network (radio access network, RAN) nodes that constitute a gNB or a transmission point, the plurality of RAN nodes cooperate to assist the terminal in implementing radio access, and different RAN nodes respectively implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

The network device provides a communication service for a terminal device in a cell. The terminal device in the cell communicates with the network device by using a transmission resource (for example, a frequency domain resource or a time domain resource) allocated by the network device. The cell may belong to a macro base station (for example, a macro eNB or a macro gNB).

As shown in FIG. 1, in a multi-hop relay scenario, the terminal device 113 communicates with the network device 121 through relay of the plurality of terminal devices. On a link between the terminal device 113 and the network device 121, the following network connection anomaly may occur:

A link between terminal devices is abnormal. For example, a link between the terminal device 111 and the terminal device 112 is abnormal.

A link between the terminal device and the network device is abnormal. For example, a link between the terminal device 111 and the network device 121 is abnormal.

For example, the terminal device 113 is the remote UE, the terminal device 111 and the terminal device 112 are the relay UEs, and the link between the terminal devices is a sidelink. The following network connection anomalies may occur on the link between the remote UE and the network device:
1. A PC5 RLF occurs between the remote UE and the relay UE.
2. A PC5 RLF occurs between the relay UEs
3. A Uu RLF occurs between the relay UE and the network device.
4. An RRC connection interruption/RRC configuration failure occurs between the relay UE and the network device.
5. The relay UE performs RRC connection establishment with the network device.
6. The relay UE performs cell reselection.

Another type of network connection anomaly may occur between terminal devices and between the terminal device and the network device. This is not limited herein.

This application provides a plurality of multi-hop relay methods, to quickly restore communication between a terminal device and a network device when a network connection anomaly occurs on a specific link (in other words, a specific path) in links through which information is forwarded between the terminal device and the network device via multi-hop nodes.

It should be understood that descriptions of specific scenarios in embodiments of this application are merely examples. In addition to the foregoing application scenario, the methods provided in embodiments of this application are also applicable to an application scenario in which there is a similar problem.

In the descriptions of embodiments of this application, unless otherwise stated, "a plurality" or "a plurality of" means two or more than two. In addition, "at least one" may be replaced with "one or more".

Ordinal numbers such as "first" and "second" mentioned in embodiments of this application are for distinguishing between a plurality of objects, but are not for limiting sizes, content, a sequence, a time sequence, priorities, importance degrees, or the like of the plurality of objects. For example, first indication information and second indication information may be same information, or may be different information. In addition, such names do not indicate that the two messages are different in content, sizes, application scenarios, transmitting ends/receiving ends, priorities, importance degrees, or the like. In addition, step numbers in embodiments described in this application are merely for distinguishing between different steps, but are not for limiting a sequence of the steps.

The technical solutions provided in embodiments of this application may be applied to wireless communication between communication devices. The wireless communication between the communication devices may include: wireless communication between a network device and a terminal, wireless communication between network devices, and wireless communication between terminals. In embodiments of this application, the term "wireless communication" may also be referred to as "communication" for short, and the term "communication" may alternatively be described as "data transmission", "information transmission", or "transmission".

It should be understood that names of all nodes and messages in this application are merely names specified for ease of description in this application, and may be different in an actual network. It should not be understood that names of various nodes and messages are limited in this application. On the contrary, any name that has a same or similar function as that of a node or a message used in this application is considered as a method or an equivalent replacement in this application, and is within the protection scope of this application. Details are not described below again.

In this application, "sending information to ... (the terminal)" may be understood as that a destination end of the information is the terminal, and may include directly or indirectly sending the information to the terminal. "Receiving information from ... (the terminal)" may be understood as that a source end of the information is the terminal, and may include directly or indirectly receiving the information from the terminal. Information may undergo necessary processing, for example, a format change, between the source end and the destination end for sending the information. However, the destination end may understand valid information from the source end. A similar expression in this application may be understood similarly. Details are not described herein again.

With reference to the accompanying drawings, the following describes in detail a plurality of communication methods provided in embodiments of this application.

It should be understood that the step numbers in embodiments of this application are merely for description, and do not limit a sequence of the steps.

For ease of understanding and description, the following describes the communication methods in embodiments of this application by using interaction between a terminal device and a network device as an example. However, this shall not constitute any limitation on an execution body of the communication methods in embodiments of this application. For example, a method performed by the terminal device may alternatively be performed by a module (for example, a circuit, a chip, or a chip system) in the terminal device, or may be implemented by a logical node, a logical module, or software that can implement all or some functions of the terminal device. A method performed by the network device may alternatively be performed by a module (for example, a circuit, a chip, or a chip system) in the network device, or may be implemented by a logical node, a logical module, or software that can implement all or some functions of the network device.

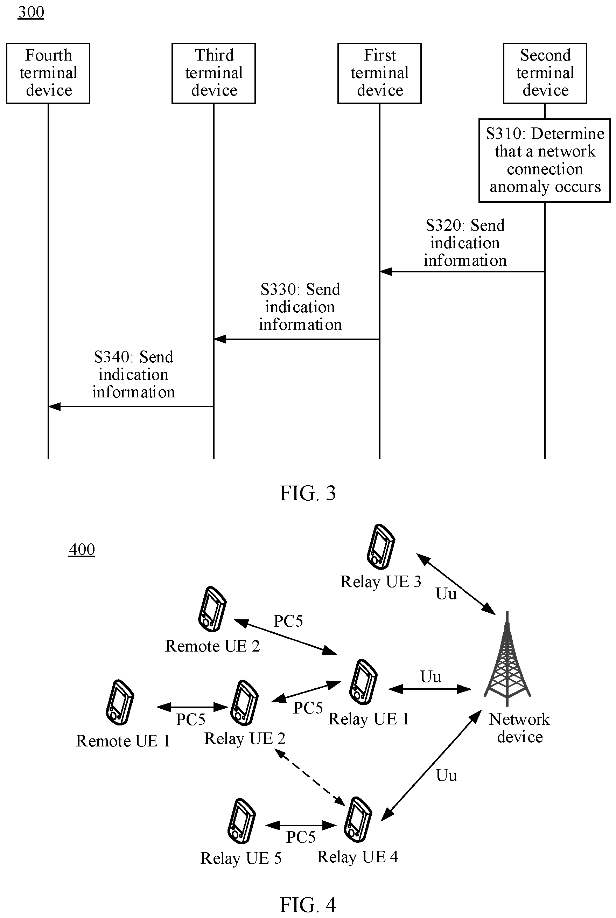

FIG. 3 shows a multi-hop relay method 300 according to this application. The method 300 includes at least a part of the method shown in FIG. 3. A first terminal device, a second terminal device, and a third terminal device are all terminal devices in a multi-hop relay scenario. The first terminal device communicates with a network device via the second terminal device, and the third terminal device communicates with the network device via the first terminal device. In other words, the first terminal device is a next-hop terminal device of the second terminal device, and the third terminal device is a next-hop terminal device of the first terminal device.

Optionally, the second terminal device further communicates with the network device via a previous-hop terminal device of the second terminal device, and at least one terminal device communicates with the network device via the third terminal device. Optionally, at least one other terminal device further communicates with the network device via any one of the first terminal device, the second terminal device, and the third terminal device.

S310: The second terminal device determines that a network connection failure occurs.

For example, the second terminal device determines that a link to the network device is abnormal or that a link between a second network device and the previous-hop terminal device thereof is abnormal.

S320: The second terminal device sends indication information to a next-hop terminal device in multi-hop relay.

It should be understood that the second terminal device is a terminal device in a multi-hop relay system, and is further connected to at least one downstream terminal device. In other words, the at least one terminal device communicates with the network device via the second terminal device.

After determining that a network connection anomaly occurs, the second terminal device notifies the downstream terminal device (including the first terminal device) of the second terminal device that the network connection anomaly occurs.

Optionally, the second terminal device sends first indication information to the first terminal device, where the first indication information indicates that the network connection anomaly occurs between the second terminal device and the network device.

Optionally, after determining that the network connection anomaly occurs, the second terminal device may perform network connection reestablishment, and send, to the first terminal device, indication information indicating a network connection status of the second terminal device, for example, indicating that the second terminal device performs network connection reestablishment.

It should be understood that before the network connection anomaly occurs, the first terminal device communicates with the network device via the second terminal device.

S330: The first terminal device sends indication information to a next-hop terminal device in multi-hop relay.

After receiving the first indication information or the indication information indicating that the second terminal device performs network connection reestablishment, the first terminal device determines that the network connection anomaly occurs. In this case, the first terminal device may perform behavior similar to that of the second terminal device. In other words, the first terminal device notifies a downstream terminal device of the first terminal device that a network connection anomaly occurs.

If the third terminal device communicates with the network device via the first terminal device, after receiving the indication information from the second terminal device, the first terminal device may send the indication information to the third terminal device.

Optionally, the first terminal device sends second indication information to the third terminal device, where the second indication information indicates that the network connection anomaly occurs between the first terminal device and the network device.

Optionally, the first terminal device may perform network connection reestablishment, and send third indication information to the third terminal device, where the third indication information indicates a network connection status of the first terminal device, for example, indicates that the first terminal device performs network connection reestablishment.

Optionally, the first terminal device may release a connection to the second terminal device.

After sending the indication information to the third terminal device, the first terminal device may receive, from the third terminal device, indication information for releasing a second connection, where the second connection is a network connection between the first terminal device and the third terminal device. In this case, the first terminal device needs to change paging message identifiers and/or system message request information that correspond/corresponds to the third terminal device and the terminal device that communicates with the network device via the third terminal device.

S340: The third terminal device sends indication information to a next-hop terminal device in multi-hop relay.

The third terminal device may send the indication information to the next-hop terminal device (for example, a fourth terminal device) in multi-hop relay, to indicate that a network connection anomaly occurs or a network status of the third terminal device. This is similar to step S330. It should be understood that S340 is an optional step. If the third terminal device is further connected to the next-hop terminal device, in other words, the third terminal device further provides a relay service for the fourth terminal device, the third terminal device may send the indication information to the next-hop terminal device of the third terminal device.

FIG. 2 shows a multi-hop relay scenario according to this application. As shown in FIG. 2, a remote UE 2 is connected to a network device via three relay UEs. With reference to the scenario and FIG. 3, the following describes the method 300 provided in this application.

As shown in FIG. 2, assuming that a relay UE 1 is an example of the second terminal device in the method 300, a relay UE 2 is an example of the first terminal device, a relay UE 3 is an example of the third terminal device, and the remote UE 2 is an example of the fourth terminal device. An example in which a connection between terminals is a sidelink connection is used.

When a network connection anomaly occurs on the relay UE 1 (including that an RLF occurs on the relay UE 1, for example, a Uu RLF occurs between the relay UE 1 and the network device, and the relay UE 1 detects the Uu RLF), the relay UE 1 sends an indication to downstream UEs (including a remote UE and a terminal that continues to serve as a relay UE).

The following describes the method in this application in detail by using an example in which the Uu RLF occurs between the relay UE 1 and the network device.

As shown in step S310 in FIG. 3, if the network connection anomaly (for example, the Uu RLF) occurs on the relay UE 1 connected to a base station, indication information may be sent to the downstream UEs (for example, a remote UE 1 and the relay UE 2 in FIG. 2) connected to the relay UE 1 through sidelinks, to indicate that the Uu RLF occurs, or indicate that a network connection failure/the network connection anomaly occurs.

Specifically, as shown in step S320 in FIG. 3, the relay UE 1 sends the first indication information to the remote UE 1 and the relay UE 2, where the first indication information indicates that the network connection anomaly occurs between the relay UE 1 and the network device, so that the downstream UEs of the relay UE 1 can reselect a relay or Uu to connect to a network.

For the remote UE 1 that receives the first indication information, after receiving the first indication information, the remote UE 1 determines that the remote UE 1 does not serve as a relay. In this case, if the remote UE 1 is in a connected state, RRC reestablishment is triggered. If the remote UE 1 is in an idle state or an inactive state, the remote UE 1 determines to keep a connection to the relay UE 1, or releases the connection to the relay UE 1 and performs relay UE reselection or cell selection, to camp on an appropriate relay UE or cell.

For the relay UE 2 (namely, the example of the first terminal device) that receives the first indication information, the UE is also a relay terminal, and provides a relay service for a downstream connected UE.

As shown in step S330 in FIG. 3, after receiving the first indication information, the relay UE 2 determines that the relay UE 2 is further connected to the UE (for example, the relay UE 3), and continues to send the second indication information to the next-hop connected UE, for example, the relay UE 3, to indicate that the network connection anomaly occurs between the relay UE 1 and the network device.

Specifically, the first indication information or the second indication information may indicate that the Uu RLF occurs, indicate that the RLF occurs, or indicate that a current link is unavailable.

The relay UE 3 receives the second indication information or the third indication information, and determines that the relay UE 3 is further connected to a downstream UE, for example, the remote UE 2 in FIG. 2. As shown in step S340 in FIG. 3, the relay UE 3 continues to generate indication information, to indicate that a network connection anomaly occurs on the relay UE 3.

The following describes a specific indication manner of the indication information by using several examples.

Optionally, the first indication information may be carried in a PC5 RRC message (for example, a NotificationMessageSidelink message), to indicate that the network connection anomaly occurs.

For example, the relay UE 1 generates the PC5 RRC message as the first indication information, to indicate, to the relay UE 2, that the Uu RLF occurs.

After receiving the PC5 RRC message, the relay UE 2 parses the PC5 RRC message, and regenerates a PC5 RRC message to be sent to the relay UE 3. Optionally, the PC5 RRC message may carry an indication of the network connection anomaly, for example, carry a failure type (failure type) indication: the Uu RLF, the radio link failure (radio link failure), or an RRC connection failure. Optionally, when handover or cell reselection occurs on a relay UE, the relay UE indicates that handover or cell reselection occurs.

Optionally, a PC5 RLF may alternatively occur on the relay UE 2. In this case, the relay UE 2 sends indication information to a directly connected downstream relay UE/remote UE, to indicate that the PC5 RLF occurs. For example, the relay UE 2 applies the PC5 RRC message to send the first indication information. Optionally, the message includes a failure type indication: the PC5 RLF.

Similarly, after the downstream UE (for example, the relay UE 3 in the figure) receives the first indication information, if there is further a next-hop UE, the downstream UE parses the PC5 RRC message that carries the first indication information, and sends indication information to the next-hop UE (for example, the remote UE 2), to indicate that a link failure occurs. If the remote UE 2 does not have a next-hop UE, after receiving the indication information, the remote UE 2 performs same behavior as that of the remote UE 1.

As described above, an existing PC5 RRC message may be applied to carry indication information indicating a network connection anomaly. However, after receiving the indication information, an intermediate-hop relay UE first parses the message, and regenerates a PC5 RRC message to indicate the network connection anomaly to a next-hop connected UE. In a manner of parsing, regenerating, and forwarding, a remote UE at an end may need long time to receive indication information indicating that a network connection anomaly. Consequently, interruption duration of the remote UE is long.

Optionally, to improve forwarding efficiency, a manner of underlying-layer transparent transmission and forwarding may be applied. For example, an SL MAC CE/SRAP control PDU is applied to indicate a link failure.

In the manner of underlying-layer transparent transmission and forwarding, the relay UE 2 receives the first indication information (for example, the SL MAC CE or a control PDU) sent by the relay UE 1 and identification information related to the first indication information, determines, based on the identification information (for example, the LCID carried in a MAC CE or a PDU type indication in the SRAP control PDU) related to the first indication information, that the first indication information is an indication of the network connection anomaly, and forwards the first indication information to the next-hop UE. A UE forwards the SL MAC CE at a MAC layer, and forwards the SRAP control PDU at an SRAP layer.

In this case, the first indication information and the second indication information may be same indication information.

Optionally, a relay UE (for example, the relay UE 1) that detects that the network connection anomaly occurs may still apply the existing PC5 RRC message to indicate, to a next-hop UE, that the network connection anomaly occurs. The next-hop UE receives and parses the PC5 RRC message, then generates the SL MAC CE or the SRAP control PDU, and then sends the SL MAC CE or the SRAP control PDU to a next hop for forwarding. The SL MAC CE or the SRAP control PDU includes an indication of a network connection anomaly and the identification information related to the first indication information.

It should be understood that the first indication information or the second indication information is carried in RRC layer signaling, SRAP layer signaling, or MAC layer signaling.

When the relay UE indicates to the next-hop UE that a Uu RLF or a PC5 RLF occurs, if the next-hop UE connected to the current UE is in an RRC idle state or inactive state, when the connected next-hop UE releases a connection to the current UE, the current UE further needs to update information that corresponds to the UE in the RRC idle state or inactive state and that mainly includes paging-related information and system message request information.

For ease of understanding, how to page and obtain a system message when the UE in the RRC idle state or inactive state accesses the relay UE is first described. First, the base station sends a paging message or a system message to a UE in a cell through broadcast, and the UE receives the paging message or the system message on a configured time-frequency resource. In a relay scenario, a remote UE communicates with the base station via the relay UE, and the paging message or the system message needs to be forwarded via the relay UE. Therefore, the UE needs to send paging-related ID information (an S-TMSI in the RRC idle state and an I-RNTI in the inactive state) thereof to the relay UE of the UE and indicate, to the relay UE of the UE, the system message that the UE expects to obtain. Therefore, the UE needs to indicate the ID information and a type of the requested system message (for example, a SIB2 and a SIB12) to the previous-hop relay of the UE. For multi-hop relay, each relay UE obtains the information about all connected downstream UEs in the RRC idle state and inactive state (in a multi-hop relay manner). If the relay UE is in the RRC idle state and inactive state, and a previous hop of the relay UE is still a relay, the relay UE needs to send ID information thereof, system message request information, and related information of connected downstream UEs in the RRC idle state and inactive state to the previous-hop relay of the relay UE.

Therefore, for the relay UE 2, when the relay UE 2 receives, from the next-hop relay UE 3, indication information for releasing a connection (namely, an example of the second connection) between the relay UE 2 and the relay UE 3, paging message identifiers and/or system message request information corresponding to the relay UE 3 and the remote UE 2 need to be changed. If the next-hop relay UE 3 keeps a PC 5 connection to the relay UE 2, the information does not need to be released.

In the foregoing method, when the network connection anomaly occurs, the relay UE 1 sends the indication information to the downstream relay UE, to indicate that the network connection anomaly occurs; and after receiving the first indication information, the relay UE 2 continues to send the indication information to the downstream UE, to indicate that the network connection anomaly occurs. The indication information is sent hop by hop according to the method.

In another possible implementation, after receiving the first indication information, the relay UE 2 may not indicate, to the downstream UE, that the network connection anomaly occurs, but indicate, to the next hop, that network connection reestablishment occurs on the current relay UE 2.

Specifically, after receiving the first indication information sent by the relay UE 1, the relay UE 2 performs network connection reestablishment, so that the relay UE 2 sends the third indication information to the relay UE 3, where the third indication information indicates that network connection reestablishment is performed between the relay UE 2 and the network device.

The following describes the method in detail.

In an implementation, the relay UE 2 is a UE in an RRC connected state/inactive state (RRC IDLE/INACTIVE UE), and the relay UE 2 may choose to keep a current PC5 connection to the previous-hop UE or release the PC5 connection.

If the relay UE 2 chooses to release the PC5 connection to the previous-hop UE (the relay UE 1), network connection reestablishment is triggered. That is, relay UE reselection or cell (cell) selection is triggered. In this case, the relay UE 2 indicates, to the next-hop UE thereof, that network connection reestablishment occurs. For example, the third indication information is indicated by the PC5 RRC message.

If the relay UE 2 keeps the PC5 connection to the previous-hop relay UE 1, the next-hop connected UE is not indicated. In other words, the next-hop relay UE 3 does not sense a link change status of the previous-hop relay UE 1 of the relay UE 2. In this case, the relay UE 3 keeps the PC 5 connection to the previous-hop relay UE 2. After the relay UE 2 restores a connection to the network, a system message SIB 1 is sent to the relay UE 3, to indicate a serving cell of the relay UE 2. The relay UE 3 still accesses the network via the relay UE 2.

In another implementation, if the relay UE 2 is a UE in an RRC connected state (RRC CONNECTED UE), the relay UE 2 performs RRC connection reestablishment. If the relay UE 2 is further connected to the next-hop UE, that RRC connection reestablishment occurs is indicated to the next-hop UE. The next-hop relay UE 3 determines, based on a reestablishment indication, to perform a subsequent action. The subsequent action includes: If the relay UE 3 is in the RRC connected state, reestablishment is performed; or if the relay UE 3 is in the RRC idle/inactive state, the connection to the relay UE 2 may be kept, or relay UE reselection or cell selection may be performed.

In the foregoing method, the relay UE no longer forwards an indication of the Uu RLF or the PC5 RLF, but performs subsequent indication based on current behavior, for example, indicates that the current UE performs reestablishment or relay UE reselection, to indicate that the next-hop UE may perform subsequent reestablishment or relay UE reselection/cell selection behavior, thereby avoiding long-time service interruption.

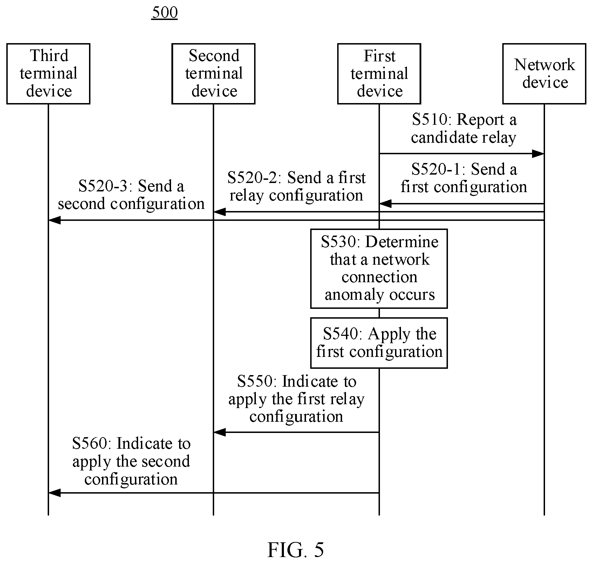

FIG. 5 shows a multi-hop relay method 500 according to this application. The method 500 includes at least a part of the method shown in FIG. 5.

In this method, a network device configures a redundancy configuration for a terminal device in a connected state, to trigger, when a network connection anomaly occurs, application of the redundancy configuration to quickly access a network, thereby reducing service interruption duration caused by the network connection anomaly.

Specifically, for the terminal device in the connected state, a base station configures the redundancy configuration (in other words, a backup configuration) for the terminal device. The redundancy configuration may take effect when a current network connection of the terminal device is unavailable. For example, if a first terminal device is in the connected state, when the first terminal device determines that a network connection anomaly occurs (for example, receives first indication information or second indication information sent by a previous-hop terminal device, or detects the network connection anomaly), the first terminal device may apply a redundancy configuration to quickly restore a connection to a network.

The following provides descriptions in detail with reference to FIG. 5.

S510 (an optional step): The first terminal device reports a candidate relay terminal device to the network device.

In an implementation, if the network device is a plurality of RAN nodes, for example, a CU and a DU, the first terminal device reports the candidate relay terminal device to the DU, and the DU reports the candidate relay terminal device to the CU.

Optionally, the first terminal device triggers measurement reporting, and reports the candidate target relay terminal device or a candidate target cell. Optionally, the first terminal device performs measurement reporting based on a measurement configuration of the base station.

In this way, the network device configures the redundancy configuration (for example, a first configuration) for the first terminal device based on the candidate target relay terminal device or target cell, or the network device configures the redundancy configuration based on a capability support status of the first terminal device. The redundancy configuration may support the first terminal device in accessing the candidate target cell or accessing the network via the candidate target relay after the network connection anomaly is sent.

In addition, the network device configures a relay configuration for the candidate terminal device reported by the first terminal device, for example, configures a first relay configuration for a second terminal device.

Optionally, the first terminal device further reports capability information thereof, to indicate that configuration of the redundancy configuration is supported. The network device configures the measurement configuration or the redundancy configuration for the first terminal device based on the capability information.

Optionally, downstream terminal device of the first terminal device also reports a candidate target relay terminal device or target cell to the network device, so that the network device also configures a redundancy configuration for the downstream terminal device, for example, configures a second configuration for a third terminal device. This is similar to the foregoing process.

S520: The network device sends the configured redundancy configuration to the first terminal device. In addition, the network device may further send a corresponding redundancy configuration to a terminal device related to the first terminal device.

In an implementation, if the network device is the plurality of RAN nodes, for example, the CU and the DU, the CU sends the configured redundancy configurations to the DU, and the DU sends the configured redundancy configurations to the first terminal device and the terminal device related to the first terminal device.

In a possible implementation, the network device configures the first configuration of the first terminal device, so that the first terminal device accesses the network device via the target relay terminal device based on the redundancy configuration. For example, if the second terminal device in FIG. 5 is the target relay terminal device, the first terminal device accesses the network device via the second terminal device based on the first configuration. In this case, the network device further needs to configure the first relay configuration of the second terminal device, where the first relay configuration is used by the first terminal device to perform relay communication with the network device via the second terminal device. Optionally, the network device also configures the redundancy configuration for the downstream terminal device of the first terminal device, for example, configures the second configuration for the third terminal device, where the second configuration is used by the third terminal device to perform network connection reestablishment via the first terminal device.

Correspondingly, the network device sends the first configuration to the first terminal device, sends the first relay configuration to the second terminal device, and sends the second configuration to the third terminal device.

In a possible implementation, if the target relay terminal device is located on a different network device referred to as a network device 2, after the network device determines that the target relay terminal device is located on the network device 2, the network device sends redundancy configuration request information to the network device 2, where the redundancy configuration request information includes context information of the first terminal device and measurement report information of the second terminal device, for example, includes one or more of configuration information of the first terminal device on the network device, identification information of the second terminal device, and link measurement information of the second terminal device. The link measurement information of the second terminal device may include link signal quality between the second terminal device and the network device, or inter-terminal-device link signal quality between the second terminal device and a relay device thereof. The network device 2 determines configuration information of the first terminal device and the second terminal device on the network device 2, and sends the configuration information to the network device via redundancy configuration reply information.

In another possible implementation, when sending the redundancy configuration request information to the network device 2, the network device further indicates a context configuration of the third terminal device. The network device 2 determines configuration information of the third terminal device on the network device 2, and sends the configuration information to the network device via the redundancy configuration reply information.

S530: The first terminal device determines that the network connection anomaly occurs.

Specifically, the first terminal device may detect the network connection anomaly, or receive the indication information indicating the network connection anomaly in the method 300.

S540: The first terminal device applies the first configuration, where the first configuration is used by the first terminal device to perform network connection reestablishment with the network device (or the network device 2) via the second terminal device.

S550: The first terminal device indicates the second terminal device to apply the first relay configuration, where the first relay configuration is used by the first terminal device to perform relay communication with the network device via the second terminal device.

It should be understood that, to successfully perform network connection reestablishment by the first terminal device via the second terminal device, the first terminal device not only needs to apply the first configuration, but also needs to indicate the second terminal device to apply the first relay configuration corresponding to the first configuration.

Optionally, the first configuration includes at least one of the following information: an identifier of the second terminal device, a first identifier, and an identifier of the first terminal device, where the first identifier identifies the first configuration. The first relay configuration includes at least one of the following information: the identifier of the second terminal device, the identifier of the first terminal device, and the first identifier, where the first identifier identifies the first configuration and/or the first relay configuration.

Optionally, the first terminal device sends fourth indication information to the second terminal device, where the fourth indication information indicates the second terminal device to apply the first relay configuration. The fourth indication information includes at least one of the following information: the identifier of the second terminal device, the identifier of the first terminal device, and the first identifier, where the first identifier identifies the first configuration and/or the first relay configuration.

After receiving the fourth indication information, the second terminal device may apply the first relay configuration based on the first identifier in the fourth indication information.

S560: The first terminal device indicates the third terminal device to apply the second configuration. (It is noted that this step is an optional step. Alternatively, that the network connection anomaly occurs may be directly indicated to the third terminal device. That is, the foregoing solution is applied. Whether to indicate to apply the configuration or indicate that the network connection anomaly occurs may specifically depend on implementation of the terminal device (namely, the first terminal device).)

After determining that the network connection anomaly occurs, the first terminal device may notify the downstream terminal device of the first terminal device to apply the redundancy configuration, for example, notify the third terminal device to apply the second configuration.

Optionally, the first terminal device sends fifth indication information to the third terminal device, where the fifth indication information indicates the third terminal device to apply the second configuration, and the second configuration is used by the third terminal device to perform network connection reestablishment with the network device via the first terminal device. The first configuration further includes a relay configuration used by the third terminal device to communicate with the network device via the first terminal device.

It should be understood that, to successfully perform network connection reestablishment by the third terminal device via the first terminal device, the first terminal device not only needs to apply the first configuration, but also needs to indicate the third terminal device to apply the second configuration corresponding to the first configuration.

Optionally, the fifth indication information includes at least one of the following information: an identifier of the third terminal device, the identifier of the first terminal device, and a second identifier, where the second identifier identifies the first configuration and/or the second configuration.

Optionally, the first configuration further includes at least one of the following information: the identifier of the third terminal device and the second identifier, where the second identifier identifies the first configuration and/or the second configuration.

Optionally, the second configuration includes at least one of the following information: the identifier of the third terminal device, the identifier of the first terminal device, and the second identifier, where the second identifier identifies the first configuration and/or the second configuration.

After receiving the fifth indication information, the third terminal device may apply the second configuration based on the second identifier in the fifth indication information.

FIG. 4 shows another multi-hop relay scenario according to this application. With reference to the scenario and FIG. 5, the following describes the method 500 provided in this application.

As shown in FIG. 4, assuming that a relay UE 2 is an example of the first terminal device in the method 500, a relay UE 4 is an example of the second terminal device, and a remote UE 1 is an example of the third terminal device.

As shown in FIG. 4, a link between the relay UE 2 and a first network device via a relay UE 1 is referred to as a first link, and a link between the relay UE 2 and a second network device via the relay UE 4 is referred to as a second link. It should be understood that, the first network device and the second network device may be a same network device, or may be different network devices.

First, as shown in step S510, the relay UE 2 triggers measurement reporting through the first link, and reports the candidate target relay or target cell (the candidate target relay and the candidate cell are a target relay and a target cell that are indicated in the redundancy configuration). In this way, the network device configures the redundancy configuration for the relay UE 2. The redundancy configuration may support the relay UE 2 in accessing the candidate target cell through the second link or accessing the network via the candidate target relay.

Optionally, the network device configures the redundancy configuration for the relay UE 2 based on reporting of the UE and the capability support status of the UE.

The relay UE 2 (namely, the example of the first terminal device) is used as an example. As shown in step S520-1, the network device configures a redundancy configuration #3 (namely, an example of the first configuration) for the relay UE 2 and sends the redundancy configuration #3 to the relay UE 2. The relay UE 2 receives the redundancy configuration #3.

Optionally, the redundancy configuration #3 includes at least one of an identifier of the candidate target relay, namely, the relay UE 4 (namely, the example of the second terminal device), the first identifier, and an identifier of the relay UE 2, where the first identifier identifies the redundancy configuration #3. The redundancy configuration #3 further includes a PC5 RLC channel configuration, an adaptation layer mapping relationship configuration, and the like that are applied after the relay UE 2 accesses the relay UE 4.

As shown in step S530, after the relay UE 2 detects that the network connection anomaly occurs or receives the first indication information or the second indication information (indicating that the network connection anomaly is sent or that network connection reestablishment is performed) from the relay UE 1, as shown in step S540, the relay UE 2 may trigger application of the redundancy configuration #3, and perform network connection reestablishment with the second network device through the second link based on the redundancy configuration #3.

It should be understood that performing network connection reestablishment with the second network device through the second link may alternatively be understood as performing network connection reestablishment with the second network device via the relay UE 4.

In correspondence to the redundancy configuration #3 of the relay UE 2, to enable the relay UE 2 to quickly access the base station via the relay UE 4, as shown in step S520-2, the base station further needs to configure, on a relay UE 4 side, a relay configuration #1 (namely, an example of the first relay configuration) corresponding to the redundancy configuration #3 of the relay UE 2 and send the relay configuration #1 to the relay UE 4.

The relay configuration #1 may include at least one of the following information: the identifier of the relay UE 2 (the identifier of the relay UE 2 may be a temporary identifier allocated by the base station), an identifier of the relay UE 4, and the first identifier. For the relay UE 2, the first identifier identifies the redundancy configuration #3. For the relay UE 4, the first identifier identifies the relay configuration #1. The relay configuration #1 corresponds to the redundancy configuration #3. The relay configuration #1 further includes a PC5 relay RLC channel configuration between the relay UE 4 and the relay UE 2, a Uu relay RLC channel configuration between the relay UE 4 and the base station, an adaptation layer mapping relationship configuration, and the like.

Optionally, the base station may configure a plurality of sets of redundancy configurations for a UE, and perform arrangement in a priority sequence.

For example, the base station may configure redundancy configurations #5 and #6 for a remote UE 2, configure redundancy configurations #3 and #4 for the relay UE 2, and configure redundancy configurations #1 and #2 for the relay UE 1.

Similarly, the relay UE 2 is used as an example. In addition to the redundancy configuration #3, the base station may further configure the redundancy configuration #4 for the relay UE 2, where the redundancy configuration #4 corresponds to a relay UE 5. In a possible case, in the redundancy configuration #3, a condition for applying the current redundancy configuration may be further configured. For example, a sidelink measurement result between the relay UE 2 and the relay UE 4 exceeds a specific threshold. Therefore, when signal quality between the relay UE 4 and the relay UE 2 is poor due to a change of a distance between the relay UE 4 and the relay UE 2, the relay UE 2 sequentially applies the redundancy configuration #4, to access the base station via the relay UE 5. In addition, if an application condition is configured for the redundancy configuration #4, and is not satisfied currently, because there is no other configuration except the redundancy configurations #3 and #4, the relay UE 2 performs network connection reestablishment. Alternatively, the base station may configure link signal quality between the current relay UE2 and the candidate relay corresponding to the redundancy configuration as a trigger condition. When the link quality between the UE and the candidate relay is poor, for example, is less than a configured threshold, the corresponding redundancy configuration cannot be triggered either.

In correspondence to the redundancy configuration #4, corresponding relay configurations further need to be configured for the relay UE 4 and the relay UE 5, and are denoted as a relay configuration #2 and a relay configuration #3. The relay configuration #2 and the relay configuration #3 need to carry the identifier of the relay UE 2, or an identifier identifying that the relay configuration #2 and the relay configuration #3 correspond to the redundancy configuration #4.

In a possible implementation, if the relay UE 2 triggers application of the redundancy configuration #3, as shown in step S550, the relay UE 4 further needs to be indicated to trigger application of the relay configuration #1. The indication information (namely, an example of the fourth indication information) may include at least one of the following information: the identifier of the relay UE 2, the identifier of the relay UE 4, the first identifier, and a first relay identifier, where the first identifier identifies the redundancy configuration #3, and the first relay identifier identifies the relay configuration #1.

If the relay UE 2 triggers application of the redundancy configuration #4, that is, accesses the base station via the relay UE 5, the relay UE 2 further needs to trigger the relay UE 5 and the relay UE 4 to apply the corresponding relay configurations. Specifically, after establishing a connection to the relay UE 5, the relay UE 2 sends indication information to the relay UE 5, to indicate the relay UE 5 to trigger the corresponding relay configuration #2. The relay UE 5 continues to send indication information to the relay UE 4, where the indication information includes the identifier of the relay UE 2, and indicates the relay UE 4 to trigger application of the relay configuration #3.

It should be understood that the base station may update a redundancy configuration on a UE side based on measurement reporting of the UE, for example, add a new redundancy configuration or delete an original redundancy configuration.

Optionally, if the UE enters an idle/inactive state from the connected state, the UE releases the configured redundancy configuration. Correspondingly, the base station needs to update a relay configuration on a relay UE side.

In the foregoing method, the base station configures the redundancy configuration for the UE in the connected state, so that when detecting that an RLF occurs or receiving an indication that is of a network connection anomaly and that is indicated by a previous-hop relay UE, the UE directly applies the redundancy configuration to access a network, thereby reducing service interruption duration of the UE.

However, in a multi-hop relay system, when the UE applies the redundancy configuration to access the network, a downstream UE of the UE may not be capable of accessing the network in time. To resolve the problem, redundancy configurations may be provided for a group of UEs (including the UE and a UE that performs communication through relay of the UE). When the UE detects that the RLF occurs or receives an indication indicating that the RLF occurs, the group of UEs may all enable the redundancy configurations to take effect and quickly access the network, thereby reducing service interruption duration caused by the RLF.

As shown in FIG. 4:
In a possible implementation, the relay UE 2 and the remote UE 1 are used as a group of UEs. The base station may select a target cell or target relay UE for the relay UE 2 based on measurement reporting of the relay UE 2, and respectively configure redundancy configurations for the relay UE 2 and the remote UE 1.

When the relay UE 2 (namely, the example of the first terminal device) detects that the network connection anomaly occurs, the relay UE 2 may determine to apply the redundancy configuration (for example, the first configuration). For example, the redundancy configuration of the relay UE 2 may include an identifier of the target cell or an identifier of the target relay (for example, the identifier of the relay UE 4, that is, indicate the relay UE 2 to access the network via the relay UE 4), and may further include a PC5 relay RLC channel configuration between the relay UE 2 and the remote UE 1, and a relay configuration for providing relay for the remote UE 1 and the remote UE 1. The relay configuration may include identification information of the remote UE 1 and/or the remote UE 1, and a mapping relationship between an end-to-end radio bearer of the remote UE 1 and/or the remote UE 1 and a PC5 relay RLC channel and/or a Uu relay RLC channel. The PC5 relay RLC channel is a PC5 RLC bearer between the relay UE 2 and the remote UE 1 and/or the remote UE 1, and the Uu relay RLC channel is an RLC bearer between the relay UE 2 and the base station.

After determining to apply the redundancy configuration, the relay UE 2 further needs to indicate the connected remote UE 1 to apply the redundancy configuration (namely, an example of the second configuration), as shown in step S560. Specifically, a PC5 message (namely, an example of the fifth indication information) may be sent to the remote UE 1 for indication, and the message includes identification information (namely, an example of the second identifier) of the redundancy configuration, to indicate the remote UE 1 to trigger application of the corresponding redundancy configuration. The PC5 RRC message further includes the identifier of the relay UE 2 and an identifier of the remote UE 1.

In another possible implementation, the relay UE 1, the remote UE 2, and the relay UE 2 are used as a group of UEs. When the relay UE 1 detects that a network connection anomaly occurs, the relay UE 1 may determine to apply the redundancy configuration. For example, the redundancy configuration of the relay UE 1 may include an identifier of a target cell or an identifier of a target relay (for example, the identifier of the relay UE 4, that is, indicate the relay UE 1 to access the network via the relay UE 4), and may further include a PC5 relay RLC channel configuration between the relay UE 1 and the relay UE 2/remote UE 2, and a relay configuration for providing relay for the remote UE 1, the relay UE 2, and the remote UE 2. The relay configuration may include identification information of the remote UE1/relay UE2/remote UE2, and a mapping relationship between an end-to-end radio bearer of the remote UE1/relay UE2/remote UE2 and a PC5 relay RLC channel/Uu relay RLC channel. The PC5 relay RLC channel is a PC5 RLC bearer between the relay UE 1 and the remote UE1/relay UE2/remote UE2, and the Uu relay RLC channel is an RLC bearer between the relay UE 1 and the base station.

After determining to apply the redundancy configuration, the relay UE 1 further needs to indicate the connected relay UE 2 and the remote UE 2 to apply the corresponding redundancy configurations. Specifically, a PC5 RRC message may be used for indication, and the message includes identification information of the redundancy configurations, to indicate the relay UE 2 and the remote UE 2 to trigger application of the corresponding redundancy configurations. The redundancy configuration of the remote UE 2 may include a PC5 relay RLC channel configuration of the remote UE, an end-to-end bearer configuration between the remote UE and the base station, and an adaptation layer configuration of the remote UE, and include a mapping relationship between an end-to-end radio bearer identifier and a PC5 relay RLC channel.

In still another possible implementation, if the remote UE 1 is in the connected state, and a redundancy configuration is also configured, after receiving indication information of the relay UE 1 and triggering application of the redundancy configuration, the relay UE 2 further needs to send indication information to the remote UE 1, to indicate the remote UE 1 to apply the corresponding redundancy configuration.

In a possible implementation, the base station configures a trigger condition of a redundancy configuration for a UE, to indicate whether the corresponding redundancy configuration is available, for example, whether signal quality of a target relay and a target cell that are indicated in the redundancy configuration satisfies a specific requirement. If the requirement is satisfied, application of the corresponding redundancy configuration may be triggered when an RLF occurs. If the requirement is not satisfied, the redundancy configuration is invalid.

Specifically, the UE may sequentially check, in a priority sequence of a plurality of redundancy configurations configured by the base station, whether the trigger condition is satisfied. If none of the redundancy configurations satisfies the configured trigger condition, the UE triggers reestablishment.

In a possible implementation, as a remote UE and a relay UE move, the redundancy configurations further need to be updated.

In the method 300 shown in FIG. 3, when receiving a network connection anomaly indicated by a previous-hop terminal device, a terminal device continues to indicate the network connection anomaly to a next-hop terminal device, so that a downstream terminal device can reselect a relay or Uu to connect to the network, thereby avoiding service interruption of the terminal device. In the method 300, because an indication needs to be sent hop by hop, service interruption duration may be long.

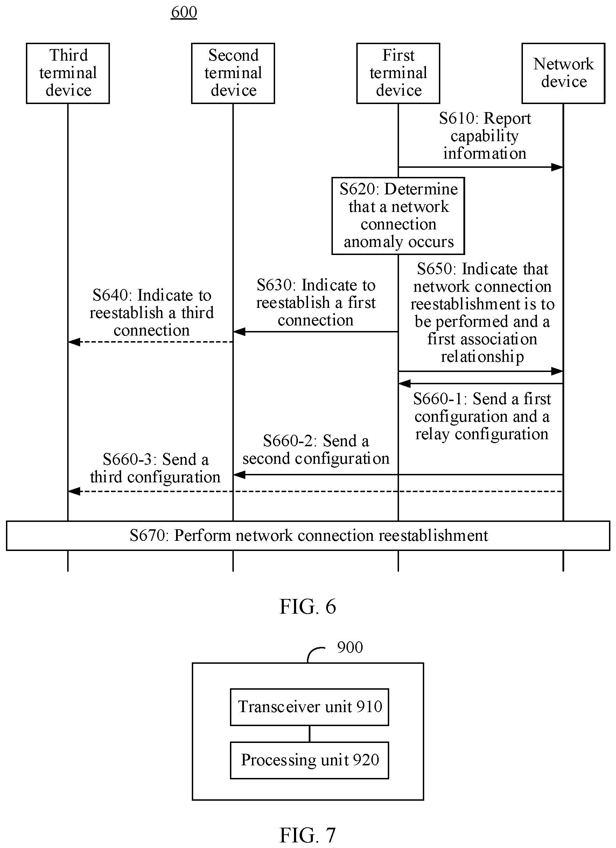

FIG. 6 shows a multi-hop relay method 600 according to this application. The method 600 includes at least a part of the method shown in FIG. 6. This can avoid sending indication information hop by hop, and reduce service interruption duration of a terminal.

The method is specific to a terminal device in a connected state. After the terminal device in the connected state determines that a network connection anomaly occurs, the terminal device in the connected state triggers reestablishment. If the terminal device is further connected to a plurality of terminal devices in the connected state, the terminal device further needs to send indication information to the plurality of terminal devices. After receiving the indication information, the plurality of terminal devices also perform reestablishment. In this method, a base station side needs to maintain a context of the terminal device, including information about and a related configuration of a downstream terminal device connected to the terminal device.

The following provides descriptions in detail with reference to FIG. 6.

S610 (an optional step): A first terminal device reports capability information to a network device.

For example, the first terminal device sends eighth indication information to the network device, where the eighth indication information indicates that the first terminal device supports configuration of a relay configuration for a downstream second terminal device in a network connection reestablishment process.

Optionally, the second terminal device and a downstream third terminal device of the second terminal device may also report indication information, to indicate that the second terminal device and the third terminal device are capable of performing network connection reestablishment with another terminal device.

Optionally, the network device performs context association for a terminal device based on obtained capability information of the terminal device.

Optionally, the first terminal device maintains a connection relationship between the first terminal device and the downstream second terminal device, and the related relay configuration.

In an implementation, if the network device is a plurality of RAN nodes, for example, a CU and a DU, the first terminal device reports the capability information to the DU, and the DU sends the capability information to the CU.

S620: The first terminal device determines that a network connection anomaly occurs.

Specifically, the first terminal device may detect the network connection anomaly, or receive the indication information indicating the network connection anomaly in the method 300.

S630: The first terminal device indicates the downstream second terminal device to reestablish a first connection. (This step is optional. Alternatively, indication may not be performed.)

The first connection is a network connection between the second terminal device and the network device via the first terminal device.

Optionally, in step S640, the second terminal device may further indicate the downstream third terminal device to reestablish a third connection, where the third connection is a network connection between the third terminal device and the network device via the second terminal device and the first terminal device.

S650: The first terminal device sends a first message to the network device, to indicate that the network connection anomaly occurs or indicate that network connection reestablishment is to occur.

Optionally, the first message includes indication information, and the indication information indicates to configure, when configuration is performed for the first terminal device, a relay configuration for a terminal device connected to the first terminal device, or the indication information indicates that the first terminal device keeps a connection to a connected terminal device.

Optionally, the first message includes an association relationship between the second terminal device and the first terminal device, to notify the network device that the first terminal device is to perform network connection reestablishment with the second terminal device.

Optionally, the second terminal device sends a second message to the network device, to indicate that the first connection is to be reestablished.

The network device configures, for each terminal device based on the connection relationship and the maintained context information of the terminal device, configuration information for network connection reestablishment.

In an implementation, if the network device is the plurality of RAN nodes, for example, the CU and the DU, the first terminal device sends the first message to the DU, and the DU sends the first message to the CU.

S660: The network device sends a first configuration to the first terminal device.

The first configuration is used by the first terminal device to perform network connection reestablishment with the network device, the first configuration includes a relay configuration, and the relay configuration is used by the second terminal device to communicate with the network device via the first terminal device.

In addition, the network device sends a second configuration to the second terminal device, where the second configuration is used by the second terminal device to reestablish the first connection to the network device via the first terminal device.

Optionally, the network device further sends a third configuration to the third terminal device, where the third configuration is used by the third terminal device to communicate with the network device via the second terminal device and the first terminal device.

In an implementation, if the network device is the plurality of RAN nodes, for example, the CU and the DU, the CU sends the configuration information corresponding to each terminal device to the DU, and the DU sends the corresponding configuration information to the terminal device.

With reference to the scenario shown in FIG. 4 and FIG. 6, the following describes the method 600 provided in this application.

As shown in FIG. 4, assuming that the relay UE 1 is an example of the first terminal device in the method 600, the relay UE 2 is an example of the second terminal device, and the remote UE 1 is an example of the third terminal device.

First, a UE (for example, the remote UE 1) in a connected state may report service terminal requirement indication information, for example, a low-interruption-duration requirement. The network device maintains, based on the indication information, a connection relationship between the UE in the connected state and relays thereof (relays of the remote UE 1 include the relay UE 2 and the relay UE 1), and sends an acknowledgement indication to the remote UE 1. Based on the foregoing requirement, when reestablishment occurs on the relay UEs of the UE in the connected state, a base station may enable the UE in the connected state to perform reestablishment together, and keep connections between the UE in the connected state and the relays thereof.

In this case, the remote UE 1 needs to indicate the relay UEs thereof, including the relay UE 2, to indicate the relay UE 2 not to trigger release of the connection between the relay UE 2 and the remote UE 1 or not to send reestablishment indication information when reestablishment occurs. Likewise, after receiving the indication, the relay UE 2 sends indication information to the relay UE 1, to indicate the relay UE 1 to keep the connection to the relay UE 2 and to no longer send indication information when reestablishment is performed.

As shown in step S610, the relay UE 1 first needs to report capability information (namely, an example of the eighth indication information) to the network device, to notify the network device that the relay UE 1 supports no release of a connection to a downstream UE when reestablishment is performed and to direct configure a relay. Optionally, the capability information further includes capability information of the downstream UE of the relay UE 1.

As shown in step S620, when determining that a network connection anomaly is sent (for example, a Uu RLF is detected), the relay UE 1 triggers network connection reestablishment. First, as shown in step S630, seventh indication information is sent to the relay UE 2, where the seventh indication information indicates that the relay UE 1 reestablishes the first connection, and the first connection is a network connection between the relay UE 2 and the network device via the relay UE 1.

Optionally, if the remote UE 1 also performs network connection reestablishment together with the relay UE 1 and the relay UE 2, after receiving the seventh indication information, as shown in step S640, the relay UE 2 sends, to the remote UE 1, indication information for reestablishing the third connection, where the third connection is a network connection between the remote UE 1 and the network device via the relay UE 2 and the relay UE 1.

Optionally, if the remote UE 2 also performs network connection reestablishment together with the relay UE 1, the relay UE 1 may further send, to the remote UE 2, indication information for reestablishing a fourth connection, where the fourth connection is a network connection between the remote UE 2 and the network device via the relay UE 1.

That the relay UE 1 triggers network connection reestablishment further includes: The relay UE 1 sends the first message to the network device, where the first message indicates that network connection reestablishment is to be performed. Optionally, the relay UE 1 may perform indication by using a cause value in an RRC reestablishment request message, or perform indication by using an RRC message, for example, a UEAsistantinforamtion message, after reestablishment is completed.

In a possible implementation, as shown in step S650, the first message includes a first association relationship, and the first association relationship is a connection relationship between the relay UE 1 and the relay UE 2. Optionally, the first association relationship further includes a connection relationship between the relay UE 1, the relay UE 2, and the remote UE 1. Optionally, the first association relationship further includes a connection relationship between the relay UE 1 and the remote UE 2.

In another possible implementation, the relay UE 2 may send the second message to the network device, where the second message is for reestablishing the first connection. Optionally, the second message may include the first association relationship.

After receiving the first association relationship, the network device may perform configuration based on UE information (including the remote UE 1, the relay UE 2, and the remote UE 2) associated in a context, and sends configuration information to the associated UEs.

Specifically, as shown in step S660, the network device sends the first configuration and the relay configuration to the relay UE 1, where the first configuration is used by the relay UE 1 to perform network connection reestablishment with the network device, and the relay configuration is used by the relay UE 2 to perform network connection reestablishment with the network device via the relay UE 1. The network device may further send the second configuration to the relay UE 2, where the second configuration is used by the relay UE 2 to perform network connection reestablishment with the network device via the relay UE 1.

Optionally, the network device may further send, to the relay UE 2, corresponding configuration information (for example, the third configuration) and/or configuration information corresponding to the remote UE 1, so that the relay UE 2 and/or the remote UE 1 may perform network connection reestablishment together with the relay UE 1.

According to the foregoing method, the relay UE 1 is to keep connections to downstream UEs, including a connection to the relay UE 2 and a connection to the remote UE 2, and keep a configuration on a PC5 connection, including a PC5 relay RLC channel configuration.

After obtaining the connection relationship that is between the UEs and that is indicated by the UE, the network device obtains, based on the connection relationship that is between the UEs and that is maintained in the context, configurations of the UEs, including relay configuration information of a relay UE, relay configuration information of a remote UE, and underlying-layer configuration (the PC5 relay RLC channel configuration) information. The base station performs relay configuration for the relay UE 1 based on the foregoing configuration information, and the foregoing configuration may be reused for the connection between the UEs.

If the relay UE performs reestablishment via a new relay UE, a local ID conflict may occur between an original configuration of the relay UE and the new relay UE. Therefore, the base station may configure local ID update for the new relay UE, or configure local ID conversion for the relay UE, to forward an RRC reconfiguration message of the remote UE. In a latter case, the base station may configure a mapping relationship of {new local ID, old local ID} for the relay UE based on a configuration in the context of the UE.

The base station maintains a connection relationship between the UE in the connected state and the relay of the UE and a relay-related configuration. When the relay triggers reestablishment based on an RLF, the base station reuses the configuration between the UE and the relay UE in the context. In this way, after the relay UE completes reestablishment, the UE may also restore a connection to the network, thereby reducing terminal duration of the UE.

FIG. 7 is a schematic block diagram of a communication apparatus 900 according to an embodiment of this application. The apparatus 900 includes a transceiver unit 910 and a processing unit 920. The transceiver unit 910 may communicate with the outside, and the processing unit 920 is configured to process data. The transceiver unit 910 may be further referred to as a communication interface or a communication unit.

In a possible implementation, the apparatus 900 may further include a storage unit. The storage unit may be configured to store instructions and/or data. The processing unit 920 may read the instructions and/or the data in the storage unit.

The apparatus 900 may be configured to perform actions performed by the network device in the foregoing method embodiments. In this case, the apparatus 900 may be a network device or a component that may be configured in the network device. The transceiver unit 910 is configured to perform receiving and sending-related operations of the network device in the foregoing method embodiments. The processing unit 920 is configured to perform processing-related operations of the network device in the foregoing method embodiments.

Alternatively, the apparatus 900 may be configured to perform actions performed by the terminal device in the foregoing method embodiments. In this case, the apparatus 900 may be a terminal device or a component that may be configured in the terminal device. The transceiver unit 910 is configured to perform receiving and sending-related operations on a terminal device side in the foregoing method embodiments. The processing unit 920 is configured to perform processing-related operations on the terminal device side in the foregoing method embodiments.

It should be further understood that the apparatus 900 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 900 may be specifically the network device or the terminal device in the foregoing embodiments, and may be configured to perform procedures and/or steps corresponding to the network device or the terminal device in the foregoing method embodiments; or the apparatus 900 may be specifically the network device or the terminal device in the foregoing embodiments, and may be configured to perform procedures and/or steps corresponding to the network device or the terminal device in the foregoing method embodiments. To avoid repetition, details are not described herein again.

The apparatus 900 in the foregoing solutions has a function of implementing corresponding steps performed by the network device or the terminal device in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to respectively perform receiving and sending operations and related processing operations in the method embodiments.

In addition, the transceiver unit 910 may alternatively be a transceiver circuit (for example, the transceiver circuit may include a receiving circuit and a transmitting circuit), and the processing unit may be a processing circuit.

It should be noted that the apparatus in FIG. 7 may be a network element or a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

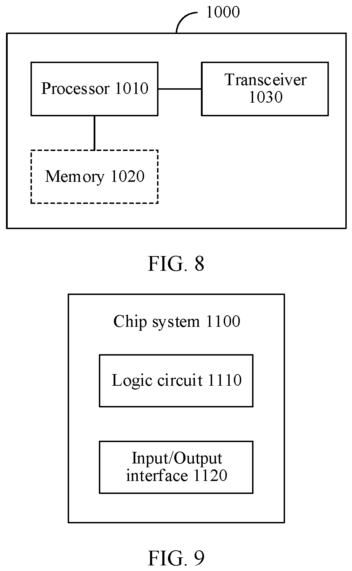

As shown in FIG. 8, an embodiment of this application further provides a communication apparatus 1000. The communication apparatus 1000 includes a processor 1010. The processor 1010 is coupled to a memory 1020. The memory 1020 is configured to store a computer program or instructions and/or data. The processor 1010 is configured to execute the computer program or the instructions and/or the data stored in the memory 1020, so that the methods in the foregoing method embodiments are performed.

In a possible implementation, the communication apparatus 1000 includes one or more processors 1010.

In a possible implementation, as shown in FIG. 8, the communication apparatus 1000 may further include the memory 1020.

In a possible implementation, the communication apparatus 1000 may include one or more memories 1020.

In a possible implementation, the memory 1020 and the processor 1010 may be integrated together, or may be disposed separately, or the processor 1020 may be located outside the communication apparatus 1000.

In a possible implementation, as shown in FIG. 8, the wireless communication apparatus 1000 may further include a transceiver 1030. The transceiver 1030 is configured to receive and/or send a signal. For example, the processor 1010 is configured to control the transceiver 1030 to receive and/or send the signal.

In a solution, the communication apparatus 1000 is configured to implement operations performed by the network device in the foregoing method embodiments.

For example, the processor 1010 is configured to implement processing-related operations performed by the network device in the foregoing method embodiments. The transceiver 1030 is configured to implement receiving and sending-related operations performed by the network device in the foregoing method embodiments.

In another solution, the communication apparatus 1000 is configured to implement operations performed by the terminal device in the foregoing method embodiments.

For example, the processor 1010 is configured to implement processing-related operations performed by the terminal device in the foregoing method embodiments. The transceiver 1030 is configured to implement receiving and sending-related operations performed by the terminal device in the foregoing method embodiments.

As shown in FIG. 9, an embodiment of this application provides a chip system 1100. The chip system 1100 (which may also be referred to as a processing system) includes a logic circuit 1110 and an input/output interface (input/output interface) 1120.

The logic circuit 1110 may be a processing circuit in the chip system 1100. The logic circuit 1110 may be coupled to and connected to a storage unit, and invoke instructions in the storage unit, to cause the chip system 1100 to implement the methods and functions in embodiments of this application. The input/output interface 1120 may be an input/output circuit in the chip system 1100, and outputs information processed by the chip system 1100, or inputs to-be-processed data or signaling information into the chip system 1100 for processing.

In a solution, the chip system 1100 is configured to implement operations performed by the network device and the terminal device in the foregoing method embodiments.

For example, the logic circuit 1110 is configured to implement processing-related operations performed by the network device in the foregoing method embodiments, and the input/output interface 1120 is configured to implement sending and/or receiving-related operations performed by the network device in the foregoing method embodiments.

An embodiment of this application further provides a computer-readable storage medium. The computer-readable storage medium stores computer instructions for implementing the methods performed by the terminal device or the methods performed by the satellite in the foregoing method embodiments.

For example, when a computer program is executed by a computer, the computer is caused to implement the methods performed by the terminal device, the methods performed by the network device, or the methods performed by the application layer network element in the foregoing method embodiments.

An embodiment of this application further provides a computer program product including instructions. When the instructions are executed by a computer, the computer is caused to implement the methods performed by the network device, the methods performed by the terminal device, or the methods performed by the application layer network element in the foregoing method embodiments.

An embodiment of this application further provides a communication system. The communication system includes one or two of the network device or the terminal device in the foregoing embodiments.

For explanations and beneficial effects of related content of any wireless communication apparatus provided above, refer to the corresponding method embodiment provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and memory (also referred to as main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

A specific structure of an execution body of the method provided in embodiments of this application is not particularly limited in embodiments of this application, provided that communication can be performed according to the method provided in embodiments of this application by running a program that records code of the method provided in embodiments of this application. For example, the execution body of the method provided in this embodiment of this application may be a terminal device or a satellite, or may be a functional module that is in the terminal device or the satellite and that can invoke and execute a program.

Aspects or features in embodiments of this application may be implemented as a method, an apparatus, or a product that uses standard programming and/or engineering technologies. The term "product" used in this specification may cover a computer program that can be accessed from any computer-readable device, carrier, or medium. For example, the computer-readable medium may include, but is not limited to: a magnetic storage device (for example, a hard disk, a floppy disk, or a magnetic tape), an optical disc (for example, a compact disc (compact disc, CD), or a digital versatile disc (digital versatile disc, DVD)), a smart card, and a flash memory (for example, an erasable programmable read-only memory (erasable programmable read-only memory, EPROM), a card, a stick, or a key drive).

The various storage media described in this specification may represent one or more devices and/or other machine-readable media for storing information. The term "machine-readable media" may include but is not limited to a wireless channel, and various other media that can store, include, and/or carry instructions and/or data.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory or a nonvolatile memory, or may include the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is the general-purpose processor, the DSP, the ASIC, the FPGA or the another programmable logic device, the discrete gate or the transistor logic device, or the discrete hardware component, the memory (a storage module) may be integrated into the processor.

It should be further noted that the memory in this specification is intended to include, but is not limited to, these memories and any other suitable type of memory.

A person of ordinary skill in the art may be aware that, with reference to the units and algorithm steps in the examples described in embodiments disclosed in this specification, this application can be implemented by electronic hardware or a combination of computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in embodiments of this application essentially, in other words, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps in the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in embodiments of this application shall fall within the protection scope of this application. Therefore, the protection scope of this application shall be subject to the protection scope of the claims.

## Claims

1. A multi-hop relay method, applied to a first terminal device, wherein the method comprises:
receiving first indication information sent by a second terminal device, wherein the first indication information indicates that a network connection anomaly occurs between the second terminal device and a first network device, and the first terminal device communicates with the first network device via the second terminal device; and
sending second indication information or third indication information to a third terminal device, wherein the third terminal device communicates with the first network device via the first terminal device, the second indication information indicates that a network connection anomaly occurs between the first terminal device and the first network device, and the third indication information indicates that the first terminal device performs network connection reestablishment.

2. The method according to claim 1, wherein the method further comprises:
receiving identification information that is related to the first indication information and that is sent by the second terminal device, wherein the identification information related to the first indication information indicates that the first indication information indicates that the network connection anomaly occurs between the second terminal device and the first network device.

3. The method according to claim 1 or 2, wherein the sending the second indication information to the third terminal device comprises:
sending the second indication information to the third terminal device based on the identification information related to the first indication information.

4. The method according to claim 1, wherein that the third indication information indicates that the first terminal device performs network connection reestablishment comprises: the third indication information indicates that the first terminal device performs RRC reestablishment or cell reselection.

5. The method according to any one of claims 1 to 4, wherein the method further comprises:
receiving, from the third terminal device, indication information for releasing a second connection, wherein the second connection is a network connection between the first terminal device and the third terminal device; and
changing paging message identifiers and/or system message request information that correspond/corresponds to the third terminal device and a terminal device that communicates with the first network device via the third terminal device.

6. A multi-hop relay method, applied to a first terminal device, wherein the method comprises:
receiving a first configuration;
determining that a network connection anomaly occurs on a first link to a first network device; and
performing network connection reestablishment with a second network device through a second link based on the first configuration, wherein the first configuration is used by the first terminal device to perform network connection reestablishment through the second link.

7. The method according to claim 6, wherein the performing network connection reestablishment with the second network device through the second link comprises:
performing network connection reestablishment with the second network device via a second terminal device.

8. The method according to claim 6 or 7, wherein the first configuration comprises at least one of the following information:
an identifier of the second terminal device, a first identifier, and an identifier of the first terminal device, wherein the first identifier identifies the first configuration.

9. The method according to any one of claims 6 to 8, wherein the method further comprises:
sending fourth indication information to the second terminal device, wherein the fourth indication information indicates the second terminal device to apply a first relay configuration, and the first relay configuration is used by the first terminal device to perform relay communication with the second network device via the second terminal device.

10. The method according to claim 9, wherein the fourth indication information comprises at least one of the following information:
the identifier of the second terminal device, the identifier of the first terminal device, and the first identifier, wherein the first identifier identifies the first configuration and/or the first relay configuration.

11. The method according to any one of claims 6 to 10, wherein the method further comprises:
sending fifth indication information to a third terminal device, wherein the fifth indication information indicates the third terminal device to apply a second configuration, the second configuration is for performing network connection reestablishment between the third terminal device and the network device through a third link, and the third link comprises a communication link between the first terminal device and the third terminal device and the second link.

12. The method according to claim 11, wherein the fifth indication information comprises at least one of the following information:
an identifier of the third terminal device, the identifier of the first terminal device, and a second identifier, wherein the second identifier identifies the first configuration and/or the second configuration.

13. The method according to claim 11 or 12, wherein the first configuration further comprises one or more of the following:
a relay configuration used by the third terminal device to communicate with the network device via the first terminal device;
the identifier of the third terminal device; and
the second identifier, wherein the second identifier identifies the first configuration and/or the second configuration.

14. The method according to any one of claims 6 to 13, wherein the method further comprises:
determining that signal quality between the first terminal device and the second terminal device satisfies a first condition.

15. A multi-hop relay method, applied to a second terminal device, wherein the method comprises:
receiving a first relay configuration; and
receiving fourth indication information sent by a first terminal device, wherein the fourth indication information indicates to apply the first relay configuration, and the first relay configuration is used by the first terminal device to perform relay communication with a second network device via the second terminal device.

16. The method according to claim 15, wherein the first relay configuration comprises at least one of the following information:
an identifier of the second terminal device, an identifier of the first terminal device, and a first identifier, wherein the first identifier identifies the first relay configuration.

17. The method according to claim 15 or 16, wherein the fourth indication information comprises at least one of the following information:
the identifier of the second terminal device, the identifier of the first terminal device, and the first identifier, wherein the first identifier identifies the first relay configuration.

18. The method according to any one of claims 15 to 17, wherein the method further comprises:
sending sixth indication information to a fourth terminal device, wherein the sixth indication information indicates the fourth terminal device to apply a second relay configuration, and the second relay configuration is used by the first terminal device and/or the second terminal device to perform relay communication with the second network device via the fourth terminal device.

19. The method according to claim 18, wherein the sixth indication information comprises at least one of the following information:
the identifier of the second terminal device, an identifier of the fourth terminal device, and a third identifier, wherein the third identifier identifies the first relay configuration and/or the second relay configuration.

20. A multi-hop relay method, applied to a network device, wherein the method comprises:
receiving information about a candidate relay terminal device sent by a first terminal device, wherein the candidate relay terminal device comprises a second terminal device;
determining a first configuration, wherein the first configuration is for performing network connection reestablishment via the second terminal device after a network connection anomaly occurs between the first terminal device and the network device; and
sending the first configuration to the first terminal device.

21. The method according to claim 20, wherein the determining the first configuration comprises:
determining the first configuration based on at least one of the following information: the information about the candidate relay terminal device and a communication capability of the first terminal device.

22. The method according to claim 20 or 21, wherein the first configuration comprises at least one of the following information:
identification information of the second terminal device, a first identifier, and identification information of the first terminal device, wherein the first identifier identifies the first configuration.

23. The method according to any one of claims 20 to 22, wherein the method further comprises:
determining a first relay configuration; and
sending the first relay configuration to the second terminal device, wherein the first relay configuration is used by the first terminal device to perform relay communication with the second network device via the second terminal device.

24. The method according to claim 23, wherein the first relay configuration comprises at least one of the following information:
an identifier of the second terminal device, an identifier of the first terminal device, and the first identifier, wherein the first identifier identifies the first configuration and/or the first relay configuration.

25. The method according to any one of claims 20 to 24, wherein the method further comprises:
determining a second configuration, wherein the second configuration is used by a third terminal device to perform network connection reestablishment via the first terminal device; and
sending the second configuration to the third terminal device.

26. The method according to claim 25, wherein the second configuration comprises at least one of the following information:
an identifier of the third terminal device, the identifier of the first terminal device, and a second identifier, wherein the second identifier identifies the first configuration and/or the second configuration.

27. The method according to claim 25 or 26, wherein the first configuration further comprises a relay configuration used by the third terminal device to communicate with the network device via the first terminal device.

28. The method according to any one of claims 25 to 27, wherein the method further comprises:
determining a second relay configuration, wherein the second relay configuration is used by the first terminal device and/or the second terminal device to perform relay communication with the network device via a fourth terminal device; and
sending the second relay configuration to the fourth terminal device.

29. The method according to claim 28, wherein the second relay configuration comprises at least one of the following information:
the identifier of the second terminal device, an identifier of the fourth terminal device, and a third identifier, wherein the third identifier identifies the second relay configuration.

30. A communication apparatus, comprising:
a unit configured to implement the method according to any one of claims 1 to 5, a unit configured to implement the method according to any one of claims 6 to 14, a unit configured to implement the method according to any one of claims 15 to 19, or a unit configured to implement the method according to any one of claims 20 to 29.

31. A computer-readable storage medium, wherein the computer-readable storage medium stores a computer program; and when the computer program is run,
the method according to any one of claims 1 to 5 is performed;
the method according to any one of claims 6 to 14 is performed;
the method according to any one of claims 15 to 19 is performed; or
the method according to any one of claims 20 to 29 is performed.

32. A chip system, comprising a processor, configured to: invoke a computer program from a memory, and run the computer program,
to perform the method according to any one of claims 1 to 5;
to perform the method according to any one of claims 6 to 14;
to perform the method according to any one of claims 15 to 19; or
to perform the method according to any one of claims 20 to 29.

33. A communication system, comprising a first terminal device, a second terminal device, and a network device, wherein the first terminal device is configured to perform the method according to any one of claims 6 to 14, the second terminal device is configured to perform the method according to any one of claims 15 to 19, and the network device is configured to perform the method according to any one of claims 20 to 29.
